# EUROPÄISCHE PATENTSCHRIFT

(11) **EP 3 346 230 B1**
(45) Veröffentlichungstag und Bekanntmachung des Hinweises auf die Patenterteilung: **28.08.2019**
(21) Anmeldenummer: 17150289.1
(22) Anmeldetag: 04.01.2017
(51) Int. Cl.: G01B 11/255, G01B 11/245, G01B 11/24, B21F 1/02

(54) **VORRICHTUNG UND VERFAHREN ZUR ERFASSUNG EINER DRAHTKRÜMMUNG**
DEVICE AND METHOD FOR MEASURING THE CURVATURE OF A WIRE
DISPOSITIF ET PROCEDE DE MESURE DE LA COURBURE D'UN FIL

(43) Veröffentlichungstag der Anmeldung: 11.07.2018
(73) Patentinhaber: Schlatter Industries AG, 8952 Schlieren (CH)
(72) Erfinder: Siegrist, Roger, 5524 Niederwil (CH)
(74) Vertreter: Keller & Partner Patentanwälte AG

(56) Entgegenhaltungen:
- US-A- 5 685 186
- US-B1- 7 110 910
- HENRIK LAVRIC ET AL: "Novel approach to closed-loop control of wire bending machine", POWER ELECTRONICS AND DRIVE SYSTEMS (PEDS), 2011 IEEE NINTH INTERNATIONAL CONFERENCE ON, IEEE, 5. Dezember 2011 (2011-12-05), Seiten 1100-1105, XP032112502, DOI: 10.1109/PEDS.2011.6147397 ISBN: 978-1-61284-999-7
- MURALIKRISHNAN B ET AL: "Fiber deflection probe for small hole metrology", PRECISION ENGINEERING, ELSEVIER, AMSTERDAM, NL, Bd. 30, Nr. 2, 19. September 2005 (2005-09-19), Seiten 154-164, XP027949839, ISSN: 0141-6359 [gefunden am 2006-04-01]

## Beschreibung

### Technisches Gebiet

Die Erfindung betrifft eine Vorrichtung zur Erfassung einer Drahtkrümmung, welche eine Drahtführung umfasst. Ferner betrifft die Erfindung eine Drahtrichteinheit, welche eine erfindungsgemässe Vorrichtung zur Erfassung einer Drahtkrümmung umfasst. Ebenso bezieht sich die Erfindung auf ein Verfahren zur Bestimmung der Drahtkrümmung mit Hilfe einer erfindungsgemässen Vorrichtung und ein Verfahren zum Drahtrichten mit Hilfe der erfindungsgemässen Drahtrichteinheit.

### Stand der Technik

Draht, der weiterverarbeitet oder für einen bestimmten Zweck eingesetzt werden soll, wird in der Regel auf Spulen geliefert und weist deshalb eine gewisse Krümmung auf. Diese variiert von Fall zu Fall und hängt beispielsweise auch davon ab, wie viel Draht von der Spule bereits abgewickelt wurde. Wird der Draht mit einer anderen Krümmung, insbesondere in möglichst gerader Form benötigt, so wird er vor der weiteren Verarbeitung gerichtet oder gereckt. Um dieses Verfahren zu optimieren, seinen Erfolg und/oder die Güte zu erfassen oder auch um festzustellen, ob ein Richten überhaupt notwendig ist, sind Vorrichtungen zur Erfassung der Drahtkrümmung notwendig. Dabei ermöglicht eine schnelle Messung, die in Durchmesser und Struktur unterschiedliche Drähte erfassen kann, eine flexible Nutzung einer solchen Vorrichtung.

Die DE 195 03 850 C1 (Friedhelm Post) offenbart einen nichtrotierenden Richtapparat für Biegemaschinen mit einer integrierten Messvorrichtung. Eine Biegung im Material wird in der Messvorrichtung festgestellt, um wenigstens einen Richtstein dann so einzustellen, dass die Biegetoleranz eingehalten wird. Es können Biegungen in einer oder in mehreren Ebenen festgestellt und korrigiert werden. Dazu kann mit einer opto-elektronischen Abtastung mit einem bandförmigen Empfänger mit mehreren Empfängerbereichen gearbeitet werden, um festzustellen, ob und wie weit das Material von der Soll-Durchlaufachse abweicht. Zur opto-elektronischen Abtastung sind Lichtquellen (13, 14) und Empfänger (13', 14') (LED mit normalem oder IR Licht bzw. Fotodioden) vorgesehen, die die Kontur und die Position der Kontur des Materials in Relation zur Soll-Durchlaufachse abtasten.

Fotodioden erlauben nur die Erfassung einer Lichtmenge: Die hier offenbarte Messvorrichtung verlangt also, dass Lichtquellen, Material und Empfänger derart zueinander angeordnet sind, dass aus empfangenen Lichtmengenschwankungen auf die Position des Materials geschlossen werden kann. Das wiederum impliziert, dass der Richtapperat beziehungsweise die Messvorrichtung bei jeder Materialänderung neu eingerichtet werden muss und gewellte Konturen, Lochmuster und/oder ähnliche Unregelmässigkeiten im Material die Messung erheblich stören können.

Die DE 10 2006 028 102 A1 (Siemens) beschreibt eine Abhaspeleinrichtung für Bänder. Die Abhaspeleinrichtung weist eine Dickenmesseinrichtung auf, die zwischen dem Abhaspel und der Richtmaschine angeordnet ist. Die von der Dickenmesseinrichtung gemessene Dicke des Bandes ist einer Steuereinrichtung zuführbar. Zwischen der Richtmaschine und einer weiteren Verarbeitungseinrichtung kann noch eine Höhenmesseinrichtung angeordnet sein. Zur Dickenmessung wird vorgeschlagen, das Band über eine Referenzrolle oder zwischen zwei Führungsrollen hindurch zu führen oder das Band zweiseitig abzutasten.

Auch die in der DE 10 2006 028 102 A1 (Siemens) beschriebenen Dickenmesseinrichtungen eignen sich nur für bestimmte Geometrien des Materials. Bei einer Änderung des Materials oder einer ungleichmässigen Oberfläche muss die Dickenmesseinrichtung angepasst werden oder liefert unzuverlässige Messwerte. Auch ist fraglich, ob eine Dickenmesseinrichtung überhaupt eine Krümmung erfassen kann.

Die US 5,685,186 A (Flemmer) beschäftigt sich mit der Herstellung von sog. "Eyewires" zum Halten von optischen Linsen von Brillen. Die Vorrichtung umfasst eine Kontrollstation mit einem rotierbaren Tisch zur Aufnahme des "Eyewires". Eine Linsen- und Prisma-Anordnung wird genutzt, um zueinander orthogonale Bilder des "Eyewires" auf eine Kamera zu projizieren. Das eine Bild zeigt die Breite des Drahtes und das andere Bild die Dicke des Drahtes. Werden Daten von 200 bis 250 Messungen zusammen mit Informationen über die Drehung des Tisches ausgewertet, so kann die Länge des Drahtes und die Krümmung des Drahtes in der vertikalen und der horizontalen Richtung bestimmt werden.

Eine Krümmung kann bei diesem Verfahren erst auf vielen Einzelmessungen aus vielen unterschiedlichen Richtungen gewonnen werden. Für einen langen Draht, der nicht einfach auf einen rotierbaren Tisch gelegt werden kann, ist das Verfahren daher ungeeignet.

In dem Artikel von Muralikrishnan et al. "Fiber deflection probe for small hole metrology" wird vorgeschlagen eine Auslenkung einer seitlich beleuteten Faser anhand der Beobachtung ihres Schattenwurfs festzustellen. Die Faser wird dabei als zylindrische Linse genutzt.

Ein Draht lässt sich, anders als eine optische Faser, nicht als Linse benutzen. Daher eignet sich auch dieses Verfahren nicht zur Bestimmung von Drahtkrümmung.

Die US 7 110 910 B1 (Deffenbaugh) offenbart eine Methode und eine Vorrichtung für eine automatische Erkennung, wie gerade längliches Lagermaterial produziert wurde. Am Ausgang der Presse wird eine Reihe von Bildpaaren an bestimmten Punkten entlang der Länge des Materials vom Lagermaterial angefertigt. Jedes Bildpaar beinhaltet Bilder senkrecht zu dem Material und rechtwinklig zueinander. Aus den Bildpaaren wird ein Zentroid des Materials an beiden Enden einer Messstrecke und an mindestens einem Punkt dazwischen ermittelt. Eine virtuelle Achse wird durch die Zentroide am Ende der Strecke definiert. Die Abweichung des Zentroids am Punkt zwischen den Enden der Messstrecke von dieser virtuellen Achse ist ein Messwert für das Ausmass und die Richtung der Krümmung. Die Bildpaare können durch zwei Bildsensoren aufgenommen werden.

Die Vorrichtung kann die Krümmung nur über eine fest eingestellte Messstrecke konstanter Länge bestimmen. Sollen kleinere, lokale Krümmungen erfasst werden, so muss die Messstrecke umgebaut werden.

### Darstellung der Erfindung

Aufgabe der Erfindung ist es, eine dem eingangs genannten technischen Gebiet zugehörende Vorrichtung zur Erfassung einer Drahtkrümmung zu schaffen, welche flexibel für Drähte verschiedener Dicke und/oder verschiedener Oberflächenstruktur genutzt werden kann.

Die Lösung der Aufgabe ist durch die Merkmale des Anspruchs 1 definiert. Gemäss der Erfindung umfasst eine Vorrichtung zur Erfassung einer Drahtkrümmung mit einer Drahtführung weiter
a) ein Kamerasystem umfassend mindestens eine Kamera, wobei das Kamerasystem derart positioniert und dimensioniert ist, dass es einen in der Drahtführung geführten Draht und seine Begrenzung senkrecht zu einer Drahtlängsachse als Bilddaten erfassen kann, und
b) eine Datenauswertungseinheit, welche die Bilddaten des Kamerasystems empfangen und daraus die Drahtkrümmung bestimmen kann.

Das Kamerasystem erlaubt die optische Erfassung des geführten Drahtes. Im Gegensatz zu einfachen Lichtschranken und einzelnen Photodetektoren, erlaubt ein Kamerasystem die Erfassung von Bilddaten und stellt so kaum Anforderungen an den Draht, um dessen Geometrie überhaupt erfassen zu können: Er sollte einzig durch das Blickfeld der Kamera laufen.

Bilddaten, im Sinne dieser Erfindung, sind insbesondere Datenobjekte, welche mehrere, im Wesentlichen gleichzeitig empfangene Messwerte einer Lichtmenge in einem oder mehreren Wellenlängenbereichen (im folgenden als "Intensitätsdaten" bezeichnet) umfassen und dabei auch Informationen über den räumlichen Bezug der Intensitätsdaten zueinander (im Folgenden als "Lageinformation der Intensitätsdaten" bezeichnet), umfassen. Die Wellenlängenbereiche müssen nicht zwingend im sichtbaren Spektrum des Lichts liegen. Beispielsweise können auch Bereiche aus dem Infrarot oder UV-Bereich genutzt werden. Auch die Nutzung einzelner Wellenlängen von Licht ist möglich. Die Lageinformation der Intensitätsdaten kann dabei insbesondere über die Reihenfolge der Intensitätsdaten, den Speicherort, und/oder durch weitere Daten oder eine Kombination dieser Informations-Quellen gegeben sein.

Die Bilddaten im Sinne der Erfindung werden insbesondere durch Pixel gebildet, welche jeweils einen Intensitätswert messen. Die Menge aller, in einer im Wesentlichen gleichen Zeitspanne, gemessenen Intensitätswerte bilden die Intensitätsdaten. Die grösste Ausdehnung eines Pixels ist dabei insbesondere grösser als der Abstand zum nächstliegenden Pixel. Bevorzugt ist die räumliche Lage der Pixel in einer Kamera zueinander fest, also zeitlich im Wesentlichen unveränderbar.

Bevorzugt umfasst die Kamera mehr als 100 Pixel. Bevorzugt sind die Pixel Teil eines CCD- oder eines CMOS-Detektors.

Ein Kamerasystem kann weiter mindestens ein optisches Element wie einen Spiegel, eine Linse, eine Blende, einen Filter und/oder einen Lichtleiter umfassen und mindestens ein Ausrichtungs- und/oder Positionierungssystem, welches unverstellbar oder manuell oder durch Antriebe verstellbar sein kann. Das Ausrichtungs- und/oder Positioniersystem kann insbesondere die Positionen und/oder Ausrichtungen von optischen Elementen des Kamerasystems und/oder der Kamera zueinander festlegen. Weiter kann ein Kamerasystem eine Kamerasystemsteuerung umfassen, welche ein Ausrichtungs- und/oder Positioniersystem und insbesondere einen Antrieb steuern und/oder regeln kann, bevorzugt auch in Abhängigkeit von Messwerten und/oder durch Bilddaten, welche durch die Kamera des Kamerasystems oder eine andere Kamera oder einen anderen Detektor erfasst wurden.

Eine Drahtführung ist im Sinne der Erfindung eine Vorrichtung, welche einen Draht an mindestens einer Stelle in einer vorgegeben Lage hält. Dabei soll es bevorzugt zulässig sein, dass sich der Draht entlang seiner Längsachse durch die Drahtführung oder Teile von ihr bewegt. Bevorzugt umfasst zumindest ein Teil der Drahtführung eine Öffnung, welche im Wesentlichen dem Aussenquerschnitt des Drahtes entspricht. Besonders bevorzugt ist diese Öffnung variabel, so dass ihre Grösse an verschiedene Aussenquerschnitte des Drahtes angepasst werden kann oder sich diesen automatisch anpasst. In einer bevorzugten Ausführungsform umfasst die Drahtführung zwei Stellen, an welchen derselbe Draht in einer vorgegebenen Lage gehalten werden kann, und das Bildfeld der Kamera umfasst insbesondere einen Abschnitt zwischen diesen beiden Stellen, so dass ein von der Drahtführung geführter Draht zwischen den beiden Stellen von der Kamera erfasst werden kann.

Eine Datenauswertungseinheit kann beispielsweise ein Computer mit einem Prozessor und/oder einer Graphikkarte oder eine andere Art von Rechner sein. Zumindest Teile der Datenauswertung können aber auch manuell durchgeführt werden, so dass eine Datenauswertungseinheit Darstellungsmittel, Auswahl- bzw. Eingabemittel und einen Benutzer umfassen kann.

Das Bildfeld einer Kamera ist bevorzugt der Raumwinkelbereich, aus welchem Licht mindestens einen Pixel oder einen Teil des Detektors der Kamera erreichen kann, und dieser Pixel einen Teil der Bilddaten liefert. Insbesondere soll das Bildfeld einer Kamera vollständig ausserhalb der Kamera und insbesondere ausserhalb des Kamerasystems liegen. Dabei soll "ausserhalb der Kamera/ des Kamerasystems" bedeuten, dass in dem Strahlengang, in Richtung vom Pixel weg, kein weiteres optisches Element der Kamera oder des Kamerasystems passiert wird.

Die Blickrichtung einer Kamera ist bevorzugt die mittlere Richtung des Bildfeldes, also insbesondere diejenige Richtung die durch die Flächenschwerpunkte der Flächen, erreichbar durch Strahlen gleicher Länge ausgehend von den Pixeln der Kamera, gebildet wird. Bevorzugt ist die Blickrichtung gleich der Verlängerung der optischen Achse des letzten optischen Elements von Kamera oder Kamerasystem, in Richtung weg von den Pixeln der Kamera.

In einer Ausführungsform umfasst das Kamerasystem mindestens zwei Kameras mit jeweils einer Blickrichtung. Beide Kameras sind derart positioniert und dimensioniert, dass sie einen in der Drahtführung geführten Draht und seine Begrenzung senkrecht zur Drahtlängsachse als Bilddaten erfassen können. Die Blickrichtungen der mindestens zwei Kameras stehen in einem Winkel von grösser 0°, bevorzugt in einem Winkel zwischen 45° und 90°, insbesondere bevorzugt in einem Winkel von 90°, zueinander.

Durch die Nutzung von Bilddaten zweier Kameras, deren Blickrichtungen in einem Winkel von grösser 0° zueinander stehen, können die Begrenzungen des Drahtes in zwei unterschiedlichen und linear unabhängigen Ebenen erfasst werden. Daher erlaubt eine solche Anordnung die Erfassung der Drahtkrümmung in drei Raumdimensionen.

Bei der Bestimmung des Winkels, in welchem die Blickrichtungen zueinander stehen, sollen die Blickrichtungen als Gerade angesehen werden und jeweils der spitze Winkel bestimmt werden. Nach dieser Definition können die Blickrichtungen also nur in Winkeln zwischen 0° und 90° zueinander stehen.

Bevorzugt haben die Blickrichtungen zwar eine definierte Richtung, aber keine definierte Lage und können daher, zwecks Bestimmung des eingeschlossenen Winkels mathematisch im Raum verschoben werden, bis ein Schnittpunkt entsteht. Insbesondere können die Blickrichtungen entlang oder parallel zur Längsachse des Drahtes und/oder zur Fortsetzung der Längsachse eines Drahtes, welcher in der Drahtführung geführt wird, verschoben werden, um einen Schnittpunkt zu erreichen, an welchem der eingeschlossene Winkel bestimmt werden kann.

Je grösser der eingeschlossene Winkel ist, desto grösser ist der Winkel zwischen den Beobachtungsebenen. Die Zuordnung einer erfassten Krümmung in senkrecht zueinander stehenden Ebenen, wie in kartesischen Koordinaten üblich, wird bei grösseren Winkeln einfacher und weniger anfällig für Messfehler. Dieser Effekt zeigt sich deutlich bei Winkeln von 45° bis 90°. Bei dem maximalen Winkel von 90° ist die Auswertung am einfachsten und am wenigsten fehleranfällig.

In einer Ausführungsform schliessen die Blickwinkel von zwei oder mehr Kameras eines Kamerasystems einen Winkel von im Wesentlichen 0° untereinander ein. Dies erlaubt die Erfassung einer Drahtkrümmung in einer Ebene durch zwei unabhängige Messungen. So können Messfehler reduziert werden, und zudem weisst ein solches Kamerasystem eine gewisse Redundanz auf und daher eine höhere Zuverlässigkeit.

In einer weiteren Ausführungsform umfasst das Kamerasystem eine Kamera und eine Schwenkeinheit. Die Schwenkeinheit umfasst einen Schwenkarm und einen Grundteil. Die Kamera ist an dem Schwenkarm befestigt. Der Schwenkarm ist relativ zum Grundteil verschwenkbar. Die Kamera kann durch ein Verschwenken des Schwenkarms eine erste und eine zweite Position erreichen. In der ersten und der zweiten Position kann die Kamera einen in der Drahtführung geführten Draht und seine Begrenzungen senkrecht zur Drahtlängsachse als Bilddaten erfassen. Die Kamera hat in der ersten und zweiten Position jeweils eine unterschiedliche Blickrichtung. Die Blickrichtung der Kamera in der ersten und einer zweiten Position schliesst einen Winkel von grösser 0°, bevorzugt einen Winkel zwischen 45° und 90°, insbesondere bevorzugt einen Winkel von 90°, ein.

Eine Schwenkeinheit erlaubt es, eine Kamera derart zu bewegen, dass sie in zwei Blickrichtungen einen in der Drahtführung geführten Draht erfassen kann. Anstelle oder zusätzlich zu einer Schwenkeinheit können auch Antriebe und Verstelleinheiten genutzt werden, die in linearer Richtung wirken, und/oder es kann mehrere Beobachtungspunkte geben, in welche eine Kamera gesetzt oder an welchen sie befestigt werden kann, und/oder die Kamera selbst kann ortsfest montiert sein, aber eine optische Einheit wie z.B. ein Umlenkspiegel verändert bei einem Umschalten die Blickrichtung der Kamera. Eine umschaltbare Optik und feste Beobachtungspunkte haben den Vorteil, dass der Winkel zwischen den Blickrichtungen durch die Konstruktion gegeben ist und daher keine Winkelmessung bei der Drahtkrümmungsmessung nötig ist.

Ähnlich wie in der Ausführungsform mit zwei Kameras, erlaubt es eine dieser Vorrichtungen oder eine Kombination von ihnen, insbesondere die Schwenkeinheit mit der daran befestigen Kamera, Bilddaten in zwei unterschiedlichen Beobachtungsebenen zu gewinnen und so die Krümmung eines Drahtes in drei Raumdimensionen zu erfassen.

In einer Ausführungsform umfasst die Schwenkeinheit einen Antrieb, mittels welchem der Schwenkarm relativ zum Grundteil verschwenkbar ist.

Eine Schwenkeinheit, umfassend einen Grundkörper, einen Schwenkarm und eine an diesem Schwenkarm fest montierte Kamera, ermöglicht eine vergleichsweise einfache und präzise Bewegung und Positionierung der Kamera. Insbesondere kann der Winkel, den die Blickrichtungen einschliessen, in einem weiten Bereich durch eine Steuerung des Antriebs eingestellt werden.

In dem Antrieb integriert oder an dem Antrieb angeschlossen ist insbesondere auch eine Winkelmessvorrichtung, welche den Winkel zwischen der Kamerablickrichtung in der ersten und in der zweiten Position erfassen kann. So kann der Antrieb zum Beispiel durch einen Schrittmotor realisiert sein, der Daten zu seiner Position und/oder Positionsänderung liefert, oder es kann ein Sensor und eine Scheibe mit Markierungen verwendet werden, um die aktuelle Position des Schwenkarms relativ zum Grundkörper zu erfassen.

Bei dem Antrieb handelt es sich insbesondere um einen Elektromotor.

Anstelle eines Antriebs oder zusätzlich zu diesem, kann die Schwenkeinheit auch eine Reihe von Raststufen oder Anschlägen umfassen, in welche der Schwenkarm durch einen äusseren Impuls, durch Herunterfallen durch sein Eigengewicht oder durch Erwärmung, Abkühlung oder Verformung eines Abstandshalters gelangt. Ist der Winkelabstand zwischen den Raststufen oder Anschlägen bekannt, so kann auf eine Messung des Winkels der Blickrichtungen verzichtet werden.

In einer Ausführungsform ist eine Achse, um welche der Schwenkarm relativ zum Grundteil verschwenkbar ist, im Wesentlichen gleich der Achse, welche der Längsachse eines in der Drahtführung geführten Drahtes, insbesondere im Bereich der Drahtführung, entspricht.

Das Grundteil ist insbesondere fest gegenüber der Drahtführung positioniert.

Wenn die Achse, um welche der Schwenkarm verschwenkbar ist, im Wesentlichen der Längsachse eines in der Drahtführung geführten Drahtes entspricht, und die Kamera an dem Schwenkarm befestigt ist, so bleibt der Abstand zwischen der Längsachse des zu beobachtenden Drahtes und der Kamera im Wesentlichen konstant. Damit kann sich die Messung vereinfachen, da typische Grössen, wie z.B. die Ausdehnung des Drahtes senkrecht zu seiner Längsachse, in allen Kamerapositionen gleich oder ähnlich sind und sich auch der Fokus der Kamera, wenn überhaupt, nur wenig verschiebt. Die Bildauswertung vereinfacht sich daher.

Wenn die Achse, um welche der Schwenkarm verschwenkbar ist, gegenüber der Längsachse eines in der Drahtführung geführten Drahtes parallel verschoben ist, ändert sich der Abstand zwischen beobachtetem Draht und Kamera. Dies erlaubt, den Draht in unterschiedlichen Auflösungen zu erfassen.

Wenn die Achse, um welche der Schwenkarm verschwenkbar ist, gegenüber der Längsachse eines in der Drahtführung geführten Drahtes verkippt ist, lassen sich weitere Blickrichtungen erfassen.

In einer Ausführungsform umfasst die Vorrichtung zur Erfassung einer Drahtkrümmung eine Beleuchtungseinrichtung. Die Beleuchtungseinrichtung ist insbesondere so angeordnet, dass sie Licht in einer umgekehrten Blickrichtung einer Kamera des Kamerasystems aussenden kann.

Ist die Umgebung, in welcher die Vorrichtung betrieben wird, hell genug bzw. die Kamera der Vorrichtung lichtempfindlich genug, so können auch ohne Beleuchtungseinrichtung von der Kamera Bilddaten gewonnen werden, welche sich zur Auswertung durch die Datenauswertungseinheit eignen.

Umfasst die Vorrichtung selbst eine Beleuchtungseinrichtung, so kann die Beleuchtung auf optimale Betriebsbedingungen der Kamera und/oder auf eine besonders einfache und klare Datenauswertung in der Datenauswertungseinheit hin optimiert werden.

Die Beleuchtungseinrichtung kann so angeordnet sein, dass viel von dem Licht am Draht reflektiert und gestreut wird und dieses Licht von den Pixeln der Kamera erfasst wird. Eine solche Beleuchtung erlaubt es, Details von der der Kamera zugewandten Seite des Drahtes als Bilddaten zu erfassen.

Die Beleuchtungseinheit kann aber auch so angeordnet sein, dass Licht der Beleuchtungseinheit auf dem Weg zu den Pixeln der Kamera abgedeckt wird und von der Kamera weggestreut bzw. wegreflektiert wird. Die Beleuchtungseinrichtung ist dann so angeordnet, dass sie Licht in einer umgekehrten Blickrichtung einer Kamera aussendet. Der Draht erscheint in diesem "Backlight" dann als im Wesentlichen gleichmässig dunkel, vor einem hellen Hintergrund. Um die Konturen des Drahtes zu erfassen, hat dies den Vorteil, dass die Bilddaten nicht mehr Details zeigen als von Interesse für die Erfassung der Drahtkrümmung sind. Die Auswertung ist daher weniger fehleranfällig.

In einer bevorzugten Ausführungsform ist die Beleuchtungseinrichtung derart ausgebildet, dass sie im Wesentlichen über das gesamte eine gesamte, von der Kamera erfasste Fläche, gleichmässig Licht abstrahlt.

Ein besonders vorteilhafter und klarer Kontrast zwischen Draht und Hintergrund lässt sich auf den Bilddaten erreichen, wenn der darauf abgebildete Hintergrund gleichmässig ausgeleuchtet ist. Insbesondere ist daher die Beleuchtung im Bereich des Kamerablickfeldes im Wesentlichen gleichmässig. Bevorzugt ist eine im Wesentlichen gleichmässige Beleuchtung, die weniger als 30% in der Intensität im von der Kamera erfassten Bereich schwankt, insbesondere um weniger als 10%.

Die Beleuchtungseinheit kann zum Beispiel als von hinten oder der Seite beleuchteten Box mit einer diffusen Oberfläche, wie z.B. Milchglas oder geeignetem Paper, oder mehreren hintereinander angeordneten diffusen Oberflächen gestaltet sein. Beleuchtungseinheiten, die eine im Wesentlichen gleichmässige Beleuchtung erzeugen, sind zum Beispiel zur Kalibration von Teleskopen oder als Zubehör für professionelle Fotographen erhältlich. Leuchtmittel können beispielsweise LEDs, Leuchtstoffröhren, Glühlampen, Gasentladungsröhren oder andere Leuchtmittel umfassen. Das erzeugte Licht kann auf einzelne Wellenlängen konzentriert sein oder aber ein möglichst gleichmässiges Spektrum aufweisen und ist insbesondere auf die Empfindlichkeit der Pixel der Kamera abgestimmt.

Es ist aber auch möglich, dass eine lokale, also ungleichmässige, Lichtquelle als Backlight genutzt wird. Eine lokale Lichtquelle kann insbesondere eine oder mehrere LED's, Leuchtstoffröhren, Glühlampen, Gasentladungsröhren oder andere Leuchtmittel umfassen. Das erzeugte Licht kann auf einzelne Wellenlängen konzentriert sein oder aber ein möglichst gleichmässiges Spektrum aufweisen und ist insbesondere auf die Empfindlichkeit der Pixel der Kamera abgestimmt.

In einer weiteren Ausführungsform ist nur der Bereich um die erwartete Position mindestens eines Längenabschnitts eines im Wesentlichen gleichmässig beleuchtet durch die Beleuchtungseinheit. Dabei erstreckt sich der Bereich in Richtung senkrecht zur erwarteten Lage der Drahtlängsachse, bevorzugt um mindestens 0.25 der zu erwartenden Drahtdicke auf beiden Seiten dieser zu erwartenden Drahtdicke, also 0.75 der zu erwartenden Drahtdicke ausgehend von der Drahtlängsachse. Der Längenabschnitt des Drahtes erstreckt sich insbesondere über mindestens 5 zu erwartende Drahtdicken in Richtung der zu erwartenden Längsachse des Drahtes.

In einer Ausführungsform ist jede Kamera des Kamerasystems einer Beleuchtungseinrichtung zugeordnet, welche Licht in einer umgekehrten Blickrichtung der jeweiligen Kamera aussenden kann.

Bevorzugt erfüllt jede dieser Beleuchtungseinrichtungen wenigstens eine der oben beschriebenen möglichen Eigenschaften von Beleuchtungseinrichtungen.

Ist jeder Kamera des Kamerasystems eine ähnlich gestaltete Beleuchtungseinrichtung zugeordnet und handelt es sich um vergleichbar lichtempfindliche Kameras mit ähnlicher Auflösung, so können sich die Bilddaten der verschiedenen Kameras im Wesentlichen nur durch den Blickwinkel, aber nicht durch andere Eigenschaften, unterscheiden. Dies vereinfacht die Auswertung und die Vergleichbarkeit der erfassten Bilddaten.

In einer Ausführungsform wird eine einzige Beleuchtungseinrichtung von mehreren Kameras genutzt. Die Beleuchtungseinrichtung kann so gross sein, dass sie im Blickfeld mehrerer Kameras liegt. Eine Beleuchtungseinrichtung kann aber auch so bewegt werden, dass sie zur Erfassung erster Bilddaten von einer ersten Kamera genutzt wird und zur Erfassung zweiter Bilddaten von einer zweiten Kamera mit einer anderen Blickrichtung.

In einer Ausführungsform ist eine Beleuchtungseinrichtung an dem Schwenkarm befestigt und zwar insbesondere derart, dass sie Licht in einer umgekehrten Blickrichtung der am Schwenkarm befestigten Kamera aussenden kann.

Diese Anordnung erlaubt eine klare und feste Zuordnung einer Kamera zu einer Beleuchtungseinheit und erlaubt trotz der Bewegung von beiden Teilen stets eine gleichbleibende Ausrichtung von Kamera und Beleuchtungseinheit aufeinander.

In einer Ausführungsform ist eine Kamera an einem Schwenkarm einer grossflächigen Beleuchtungseinrichtung zugeordnet, welche in einer ersten und einer zweiten Kameraposition als Beleuchtungseinrichtung dient. In einer weiteren Ausführungsform sind mehrere Beleuchtungseinrichtungen an verschiedenen, geeigneten Orten und/oder mit geeigneten Ausrichtungen platziert, um Licht in die umgekehrte Blickrichtung der Kamera oder des Kamerasystems zu senden.

In einer Ausführungsform umfasst die Vorrichtung zur Erfassung der Drahtkrümmung weiter eine Schutzvorrichtung für die mindestens eine Kamera des Kamerasystems und insbesondere für die Beleuchtungseinrichtung. Die Schutzvorrichtung ist insbesondere derart gestaltet, dass die mindestens eine Kamera und Beleuchtungseinrichtung in einer Parkposition vor Verschmutzung durch herumfliegende Teilchen geschützt sind. Die Schutzvorrichtung umfasst insbesondere Blenden oder einseitig oder zweiseitig offene Boxen. In der Parkposition kann die mindestens eine Kamera des Kamerasystems bevorzugt keine Bilddaten eines in der Drahtführung geführten Drahtes und seiner Begrenzungen erfassen.

Das Kamerasystem und die Beleuchtungseinheit können durch herumfliegende Teile, Staub, Öl und andere Fremdkörper leicht verschmutzt und/oder beschädigt werden. Dies erschwert oder verunmöglicht die Erfassung der Drahtkrümmung.

Um dies zu verhindern, werden die empfindlichen Teile der Vorrichtung bevorzugt geschützt. Sowohl die Kamera als auch die Beleuchtungseinheit sind besonders an ihren lichtaufnehmenden bzw. lichtabgebenden Oberflächen empfindlich. Daher werden in einer Ausführungsform diese Flächen gezielt abgedeckt, wenn Verschmutzungen zu erwarten sind.

Eine solche Schutzabdeckung kann durch eine einfache Blende geschehen, welche lichtdurchlässig oder lichtundurchlässig gestaltet werden kann. Wird sie lichtdurchlässig gestaltet, können trotz Nutzung der Blende noch Bilddaten gewonnen werden.

Weniger Wartungsaufwand fordern lichtundurchlässige Blenden oder lichtdurchlässige Blenden, durch welche keine Bilddaten gewonnen werden.

Für einen verbesserten Schutz vor Verschmutzung können Boxen aus stabilem Material montiert werden, in welche die Kamera und/oder die Beleuchtungseinheit gelegt oder gefahren werden können.

Insbesondere wenn die Kamera und gegebenenfalls die Beleuchtungseinheit an einem Schwenkarm befestigt sind, kann der Schwenkarm in eine Parkposition gefahren werden, in welcher Kamera und/oder Beleuchtungseinheit von jeweils einer Blende oder teilweise geöffneten Box abgedeckt oder umfasst werden. Auch kann es sich um eine schliessbare Box handeln. Eine schliessbare Box ist dabei bevorzugt ein Behälter, welcher entweder durch ein passendes Deckenstück an der Kamera oder Beleuchtungseinheit verschlossen werden kann oder über einen Deckelmechanismus verfügt, der die Box, zumindest wenn sie gefüllt ist, verschliesst. Bevorzugt umfasst die Schutzvorrichtung weiter einen Reinigungsmechanismus. Der Reinigungsmechanismus erlaubt zum Beispiel ein Wegblasen von aufliegenden Verschmutzungen mit Druckluft und/oder ein Auftragen von einem Reinigungsmittel und/oder ein Aufbringen oder Abtragen eines Schutzfilmes.

In einer Ausführungsform umfasst die Datenauswertungseinheit mindestens eine Schnittstelle, an welche mindestens eine Benutzerschnittstelle angeschlossen werden kann. Bei der Benutzerschnittstelle handelt es sich insbesondere um einen Bildschirm, eine Tastatur und/oder eine Computermaus. Auf diese Art ist ein Datenauswertungsprogramm, welches durch die Datenauswertungseinheit ausführbar ist, über eine graphische Benutzeroberfläche kalibrierbar und personalisierbar.

Es ist auch möglich, dass die Datenauswertungseinheit vom Hersteller bereits voll kalibriert geliefert wird und daher keine Benutzerschnittstellen zu diesem Zweck mehr aufweisen muss.

In einer Ausführungsform handelt es sich bei den Benutzerschnittstellen um Drehknöpfe oder Tasten oder einen Touchscreen, welche in der Datenauswertungseinheit selbst integriert sind.

Bei der Schnittstelle kann es sich um einen mechanischen Stecker handeln oder auch um eine drahtlose Datenverbindung.

In einer Ausführungsform umfasst die Vorrichtung zur Erfassung einer Drahtkrümmung eine Ethernet-Verbindung, welche eine Übertragung von Bilddaten des Kamerasystems, insbesondere der mindestens einen Kamera, an die Datenauswertungseinheit ermöglicht. Eine Ethernet-Verbindung ist eine stabile und schnelle Verbindung zur Datenübertragung. Es können aber auch andere Datenübertragungsmethoden und Mittel genutzt werden, um die Bilddaten des Kamerasystems an die Datenauswertungseinheit zu übertragen. Insbesondere sind drahtlose Verfahren und die Nutzung von Lichtleitern möglich.

In jeder Ausführungsform ist die Datenauswertungseinheit derart gestaltet, dass sie folgende Schritte ausführen kann:
a) bevorzugt die Bilddaten auf einen gewünschten, vordefinierten Abschnitt zuschneiden, so dass ein Bildausschnitt resultiert;
b) die Bilddaten oder den Bildausschnitt binärisieren, indem alle Bildpunkte mit einer Helligkeit geringer oder gleich als ein Schwellenwert einen ersten Wert zugewiesen erhalten und alle Bildpunkte mit einer Helligkeit grösser als der Schwellenwert einen anderen, zweiten Wert zugewiesen erhalten;
c) aus dem binärisierten Bildausschnitt die Konturen, insbesondere eine erste und eine zweite Kontur, ermitteln, insbesondere indem alle Bildpunkte eines Wertes bestimmt werden, bei denen mindestens einer der direkten Nachbarn einen anderen Wert aufweist als der Bildpunkt selbst.

Schritt a) ermöglicht es, nur diejenigen Bilddaten weiterzuverarbeiten, welche für die Drahtkrümmung von Interesse sind. Durch das Zuschneiden der Bilder kann die Vorrichtung Kameras nutzen, deren Blickfeld grösser ist als für die aktuelle Messung nötig, ohne dass überflüssige Ressourcen für die Auswertung gebraucht werden. Auf Schritt a) zu verzichten und direkt mit Bilddaten anstelle des Bildausschnitts zu arbeiten, kann die Auswertung vereinfachen, da kein Abschnitt vordefiniert werden muss.

Durch den Schritt b) wird die Grösse der Bilddaten verringert und unerwünschte Strukturen und Artefakte können zum Verschwinden gebracht werden. Gemäß der Erfindung wird Schritt b) in Schritt c) integriert, indem alle Bildpunkte bestimmt werden, die selbst einen Wert oberhalb der Schwelle und mindestens einen Nachbarn mit einem Wert unterhalb oder gleich der Schwelle haben und/oder die selbst einen Wert unterhalb oder gleich der Schwelle und mindestens einen Nachbarn mit einem Wert oberhalb der Schwelle haben. Dies spart etwas Speicherplatz und/oder Zeit zum Schreiben der Daten aus Schritt b).

Schritt c) ermittelt alle Bildpunkte, die zur ersten oder zweiten Kontur gehören: Zur ersten oder zweiten Kontur gehören in einer Ausführungsform alle Bildpunkte mit dem ersten Wert, bei denen mindestens einer der direkten Nachbarn den zweiten Wert hat. In einer Ausführungsform gehören zur ersten oder zweiten Kontur alle Bildpunkte mit dem zweiten Wert, bei denen mindestens einer der direkten Nachbarn den ersten Wert hat. In einer Ausführungsform gehören zur ersten oder zweiten Kontur alle Bildpunkte, bei denen mindestens einer der direkten Nachbarn einen anderen Wert hat als der untersuchte Bildpunkt selbst. Welche dieser Ausführungsformen günstig ist, kann unter anderem von dem genutzten Kamerasystem, seinen Einstellungen und den Abmessungen der Vorrichtung abhängen und lässt sich vom Fachmann in wenigen Versuchen herausfinden und wählen. Ebenso kann die Wahl der Ausführungsform dem Nutzer überlassen werden und eine der möglichen, personalisierbaren Einstellungen darstellen. Weiter kann die Datenauswertungseinheit auch alle drei Ausführungsformen ausführen und zum Beispiel anhand der Resultate eine Auswahl für die Weiterverarbeitung treffen.

Der vordefinierte Abschnitt aus Schritt a) kann vom Hersteller vorgegeben werden, insbesondere in Abhängigkeit von erwarteten Daten für den zu untersuchenden Draht und/oder durch den Nutzer über eine Benutzerschnittstelle eingestellt oder vordefiniert werden. Die Einstellung durch den Nutzer kann auf eine einzelne Messung und/oder auf vorliegende Bilddaten angewendet werden und/oder für ganze Messreihen, bestehend aus einer zeitlichen Abfolge von Bilddaten, die nacheinander ausgewertet werden, beibehalten werden.

In einer Ausführungsform ist die Datenauswertungseinheit weiter dazu ausgelegt, folgende Schritte durchzuführen:
a) Festlegen eines weit entfernten virtuellen Referenzpunktes, wobei dieser bevorzugt mehr als das zehnfache des mittleren Abstands zwischen der ersten und der zweiten Kontur von jeder der Konturen entfernt ist;
b) ausgehend von einem Ende einer ersten Kontur, nun für alle Bildpunkte die zur ersten Kontur gehören und innerhalb eines Testbereichs mit einer vordefinierten festen Länge liegen, den Abstand zum virtuellen Referenzpunkt bestimmen;
c) Erfassen des Bildpunktes der ersten Kontur innerhalb des Testbereiches, der den kleinsten Abstand zum virtuellen Referenzpunkt aufweist, als Hüllenpunkt;
d) Verschieben des Testbereiches in seiner Längsrichtung, insbesondere um eine Länge, welche grösser oder gleich einer Länge eines der Bildpunkte und kleiner oder gleich der Länge des Testbereichs ist, bevorzugt um eine Länge gleich der Länge eines der Bildpunkte;
e) Wiederholung der Punkte b), c) und d) bis die erste Kontur vollständig abgetastet ist;
f) analoge Durchführung der Schritte b) bis e) mit der zweiten Kontur anstelle der ersten, wobei bevorzugt in Schritt c) der grösste, anstellen des kleinsten, Abstand zum virtuellen Referenzpunkt zur Erfassung eines Hüllenpunktes genutzt wird;
g) Interpolation der Hüllenpunkte der ersten Konturen zu einer ersten Konturhülle und
h) Interpolation der Hüllenpunkte der zweiten Kontur zu einer zweiten Konturhülle.

Das Festlegen des virtuellen Referenzpunktes kann durch den Nutzer oder automatisch durch eine Software geschehen. Zum Beispiel kann ein Nutzer Koordinaten eines Referenzpunktes mit Hilfe einer Maus oder einer Tastatur auf der graphischen Benutzeroberfläche eingeben. Alternativ kann das Datenauswertungsprogramm auch den Abstand der ersten und zweiten Kontur ermitteln und deterministisch oder zufällig daraus einen Referenzpunkt bestimmen, der einen gewünschten Mindestabstand zu den Konturen aufweist. Schliesslich kann in der Datenauswertungseinheit auch ein Referenzpunkt fest gespeichert sein, der zum Beispiel derart weit ausserhalb der erfassten Bilddaten liegt, dass er in jedem Fall einen ausreichenden Abstand zu den Konturen hat.

Die Wahl des Mindestabstandes wird insbesondere durch die gewünschte Sicherheit, mit der ein Punkt als Hüllenpunkt erkannt werden soll, und die Länge des Testbereiches (l) bestimmt: Der Hüllenpunkt sollte bevorzugt, auf einer lokal gekrümmten Kontur, ein Extremwert, also ein Hoch- oder Tiefpunkt sein. Dadurch, dass nun aber die Abstände zu einem Punkt und nicht zur, unbekannten, Parallele der Umhüllenden bestimmt werden, kommt aus geometrischen Gründen eine Abweichung zustande. Fordert man nun zum Beispiel, dass der Abstand der beiden Grenzpunkte des Testbereiches sich in ihrer Distanz zum Referenzpunkt (d₁, d₂) um weniger als 10% von l unterscheiden sollen (d.h. (d₂ - d₁)/l < 0.1) wenn sie tatsächlich beide auf einer Parallelen zur noch unbekannten Parallelen der Umhüllenden liegen, so ergibt sich ein Mindestabstand von ca. 5 l, soll der Unterschied kleiner als 1% von l sein, so ergibt sich ein Mindestabstand von ca. 50 l, wenn der Referenzpunkt senkrecht zur Umhüllenden ober- bzw. unterhalb eines der Grenzpunkte liegt.

Wird nun zum Beispiel als Länge des Testbereiches l der doppelte Abstand der beiden Konturen voneinander gewählt, und ein Unterschied von einem Zehntel des Testbereichs (oder einem Fünftel des Abstands der Konturen) ist akzeptabel, so kann ein Mindestabstand von ca. 10mal dem Abstand der beiden Konturen gewählt werden.

Ist der Draht bzw. die Konturen des Drahtes regelmässig strukturiert und zum Beispiel gewellt, so entspricht die Länge des Testbereichs bevorzugt ca. 1.5 mal der Länge der regelmässigen Struktur. So ist sichergestellt, dass sich in jedem Testbereich ein Minium und ein Maximum der regelmässigen Struktur befinden. Die Amplitude dieser regelmässigen Struktur kann nun in die Überlegung einfliessen, welcher Abstand in der Distanz zwischen Referenzpunkt und je einem von zwei Punkten auf der (noch zu bestimmenden) Umhüllenden es noch erlaubt, einen Extremwert der regelmässigem Struktur der Kontur als solchen zu erkennen.

Im Zweifelsfall oder bei unbekannten Werten und Eigenschaften des Drahtes wird der Mindestabstand bevorzugt grosszügig gewählt.

Der Mindestabstand kann auch kleiner als der 10fache Abstand der Konturen voneinander sein. Ein kleinerer Mindestabstand hat den Vorteil, dass mit einer weniger hohen Genauigkeit gerechnet werden muss, um Unterschiede in den Distanzen überhaupt erfassen zu können. Ein kleiner Mindestabstand kann insbesondere bei grossen Amplituden einer regelmässigen Struktur einer Kontur vollkommen ausreichend sein.

In einer weiteren Ausführungsform wird eine Referenzgerade, welche bevorzugt parallel zu der Gerade verläuft, welche durch die Longitudinalachse des Drahtes, wenn er in der Drahtführung geführt wird, definiert. Es wird dann von jedem Punkt der Kontur der Abstand zu dieser Referenzgerade bestimmt, wobei der Abstand in konstanter Distanz von einer Ebene gemessen wird, welche senkrecht zur Referenzgerade liegt und den Ausgang der Drahtführung beinhaltet.

Um eine Umhüllende zu erfassen, in welcher der gesamte, möglicherweise strukturierte Draht liegt, sollte bei der Kontur, die als Ganzes näher am Referenzpunkt liegt, jeweils bevorzugt der Punkt mit kleinstem Abstand zum Referenzpunkt innerhalb eines Testbereichs bestimmt werden und auf der anderen Kontur der Punkt mit dem grössten Abstand zum Referenzpunkt. So werden die am weitesten aussen liegenden Punkte gesucht.

Es kann aber auch vorteilhaft sein, bei der Kontur, die als Ganzes weit weg ist vom Referenzpunkt, jeweils bevorzugt den Punkt mit dem grössten Abstand zum Referenzpunkt innerhalb des Testbereichs zu wählen und auf der anderen Kontur jeweils den Punkt mit dem kleinsten Abstand zum Referenzpunkt. Innerhalb einer derart bestimmten Umhüllenden liegt im Wesentlich nur noch Draht.

Die Verschiebung des Testbereichs um die Länge eines Bildpunktes tastet die Kontur in sehr feinen Schritten ab. Bei einem genügend gross gewählten Abstand zum Referenzpunkt wird dies in vielen Fällen dazu führen, dass bestimmte Punkte mehrfach als Hüllenpunkt bestimmt werden. Eine Gewichtung, in welche eingeht, wie oft ein bestimmter Punkt zum Hüllenpunkt bestimmt wurde, wird in einer Ausführungsform bei der Interpolation genutzt. Die Gewichtung kann die Qualität der Interpolation verbessern, indem vermutlich unbeabsichtigt gewählte Hüllenpunkte weniger stark berücksichtigt werden.

Um Fehler durch eine ungünstige Wahl eines Referenzpunktes, beziehungsweise deren Einfluss zu vermeiden, kann für die Analyse jedes Testbereichs oder kleinerer Gruppen von Testbereichen, jeweils ein anderer Referenzpunkt genutzt werden.

Eine Verschiebung des Testbereichs um die Länge des Testbereichs minimiert die Anzahl Rechnungen, da für jeden Bildpunkt der Kontur nur einmal der Abstand zum Referenzpunkt bestimmt werden muss. Ausserdem vereinfacht sich die Interpolation, da es nur eine kleine Zahl an Hüllenpunkten gibt, die als Stützstellen dienen. Die Bestimmung der Drahtkrümmung kann also schneller geschehen als bei einer Verschiebung des Testbereichs um eine kleinere Länge.

In einer Ausführungsform ist die Datenauswertungseinheit derart gestaltet, dass die Interpolation der Hüllenpunkte durch Catmull-Rom Splines erfolgt.

Diese haben den Vorteil, dass alle erfassten Stützpunkte auch tatsächlich Teil der ermittelten Kurve sind und sich bei sog. "centripetal Catmull-Rom Splines" der Spline nicht selbst schneidet oder eine Schlaufe bildet: Dies kann auch bei einer Drahtkontur bei der Ermittlung der Krümmung wegen der Natur des vermessenen Gegenstandes ausgeschlossen werden.

In anderen Ausführungsformen kann die Datenauswertungseinheit auch derart gestaltet sein, dass die Interpolation der Hüllenpunkte durch Geraden, Polynome, Bezier-Kurven oder andere Splines erfolgt.

In anderen Ausführungsformen kann die Datenauswertungseinheit auch derart gestaltet sein, dass sie mehrere der oben genannten Interpolationen durchführen kann und entweder auf Grund von internen oder ermittelten Daten eine der Interpolationsmethoden wählt und/oder ein Nutzer, insbesondere durch Nutzung der Benutzerschnittstelle, eine und/oder mehrere Interpolationsmethoden wählen kann, mit der anschliessend die Hüllenpunkte zu einer Umhüllenden interpoliert werden.

In einer Ausführungsform ist die Datenauswertungseinheit derart gestaltet, dass sie eine Krümmung in einer Ebene feststellen kann, indem
a) drei rechteckige Messfenster gleicher Grösse definiert werden, bei denen jeweils beide Konturen oder Konturhüllen durch alle parallel zueinander liegenden Seitenlinien verlaufen, wobei die Messfenster an drei unterschiedlichen Stellen entlang der Konturen oder Konturhüllen positioniert sind;
b) jeweils innerhalb jedes der Messfenster der Flächenschwerpunkt aller Bildpunkte bestimmt wird, die zwischen der ersten und der zweiten Kontur oder Konturhülle liegen;
c) ein Vektor, welcher die beiden am weitesten von einander entfernten Flächenschwerpunkte verbindet, bestimmt wird; und
d) der grösste Abstand eines Flächenschwerpunktes von dem Vektor als ein Mass für eine Krümmung, insbesondere eine Drahtkrümmung in einer Ebene, bestimmt wird.

Anstelle rechteckiger Messfenster könnten auch sechs parallele Geraden definiert werden, von denen jeweils zwei einen festen Abstand voneinander haben. Da die Bilddaten aber nur ein endliches Gebiet abdecken, wird die Ausdehnung solcher Geraden durch die Grenzen des Gebiets der Bilddaten beschränkt. Es ist daher irrelevant, ob es sich um Rechtecke handelt, von denen zwei Seiten ausserhalb des Gebietes des Bilddaten liegen oder ob es sich um durch dasselbe Gebiet beschränkte Paare von Parallelen handelt. Um nicht unnötig viele dem Hintergrund zugehörende Bildpunkte verarbeiten zu müssen, werden bevorzugt drei Rechtecke gewählt, welche genügend gross sind und derart platziert werden, dass jeweils beide Konturen oder Konturhüllen durch alle parallel liegende Seiten verlaufen. Alle drei Rechtecke sind daher bevorzugt gleich ausgerichtet: das heisst sie können allein durch eine Verschiebung, aber ohne eine Drehung, in Deckung miteinander gebracht werden.

Zur Bestimmung des Flächenschwerpunktes wird bevorzugt jeder Bildpunkt innerhalb des betrachteten Messfensters und zwischen der ersten und zweiten Kontur oder Konturhülle gleich gewichtet. Ein Koordinatensystem wird beliebig gewählt und entweder nur für ein Messfenster verwendet oder für mehrere Messfenster. Bevorzugt wird zur Bestimmung der Flächenschwerpunkte dasselbe Koordinatensystem verwendet, in welchem bereits die Messfenster definiert wurden. Dies verhindert Ungenauigkeiten und Fehler bei der Transformation von Daten zwischen unterschiedlichen Koordinatensystemen.

In einem kartesischen Koordinatensystem ist die erste Koordinate des Flächenschwerpunktes insbesondere die Summe aller Produkte von ersten Koordinaten mit den Flächen der Bildpunkte, die sowohl innerhalb des Messfensters liegen als auch zwischen der ersten und zwischen Kontur oder Konturhülle, geteilt durch die Summe aller Flächen der in der ersten Summe berücksichtigen Bildpunkte. Die zweite Koordinate des Flächenschwerpunktes wird analog mit der zweiten Koordinate der Bildpunkte berechnet.

Unter der Annahme, dass alle Bildpunkte dieselbe Fläche haben, kann einfach die Summe der ersten oder zweiten Koordinaten aller zu berücksichtigenden Bildpunkte durch die Anzahl der berücksichtigen Bildpunkte geteilt werden.

Der Flächenschwerpunkt wird für jedes Messfenster separat bestimmt.

Alternativ kann der Flächenschwerpunkt auch aus einem interpolierten Umriss des Gebietes bestimmt werden, in welchem alle Bildpunkte liegen, die sowohl innerhalb des Messfensters sind als auch zwischen der ersten und zweiten Kontur oder Konturhülle.

Als Mass der Krümmung wird bevorzugt der Abstand des Flächenschwerpunktes im mittleren Messfenster von einem Vektor, der die äusseren Schwerpunkte verbindet, genutzt. Da die äusseren Flächenschwerpunkte per Konstruktion auf dem Vektor liegen, ist dies bei drei Messfenstern auch der grösste Abstand. Falls mehr als drei Messfenster genutzt werden, wird bevorzugt der grösste Abstand als Mass der Krümmung angegeben.

In einer anderen Ausführungsform kann ein Kreis durch die drei Schwerpunkte gelegt werden und der Radius dieses Kreises als Mass für die Krümmung angegeben werden.

Auch kann ein Spline oder eine Kurve oder ein Polynom angegeben werden, welches die drei ermittelten Schwerpunkte als Stützstellen oder Punkte nutzt.

Weitere Masse oder Darstellungen einer Krümmung sind ebenfalls möglich.

In einer Ausführungsform sind ein Abstand zwischen einem ersten und einem zweiten Messfenster und ein Abstand zwischen einem zweiten und dritten Messfenster, in der Richtung senkrecht zu den parallel zueinander liegenden Seitenlinien, im Wesentlichen gleich.

Da jeder Schwerpunkt innerhalb seines Messfensters liegen wird, wird auf diese Art erreicht, dass die ermittelten Schwerpunkte fast gleichmässig verteilt sind entlang der Richtung senkrecht zu den parallel zueinander liegenden Seitenlinien.

Insbesondere wenn die Messfenster gleichzeitig möglichst weit auseinander und gleichmässig verteilt liegen, lässt sich so die Krümmung einfach und zuverlässig bestimmen. Je nachdem wie die Krümmung allerdings dargestellt werden soll, kann auch eine andere Aufteilung entlang der Richtung zu den parallel zueinander liegenden Seitenlinien von Vorteil sein: diese ist zum Beispiel bei manchen Splines der Fall.

In einer Ausführungsform ist die Datenauswertungseinheit dazu geeignet,
a) aus ersten Bilddaten, erzeugt von einer Kamera in einer ersten Position oder einer ersten Kamera,
b) eine erste Krümmung in einer ersten Ebene, parallel zur Normalenebene der Blickrichtung der ersten Kamera oder der ersten Position der Kamera, zu bestimmen und
c) aus zweiten Bilddaten, erzeugt von einer Kamera in einer zweiten Position oder einer zweiten Kamera,
d) eine zweite Krümmung in einer zweiten Ebene, parallel zur Normalenebene der Blickrichtung der zweiten Kamera oder der zweiten Position der Kamera, zu bestimmen und
e) die erste und die zweite Krümmung sowie Informationen zur Lage der Blickrichtungen zueinander und/oder insbesondere die Lage der Blickrichtungen gegenüber einem gemeinsamen Referenzraum zu nutzen, um eine Krümmung in drei Raumdimensionen und/oder insbesondere gegenüber dem Referenzraum zu bestimmen.

Ist nur die Lage der Blickrichtungen zueinander, nicht aber deren Lage im Referenzraum bekannt, so kann auf den ersten und zweiten Bilddaten nur die Krümmung in Bezug auf ein durch die Blickrichtungen definierten Koordinatensystem ("Blickrichtungskoordinatensystem") bestimmt werden.

Das Wissen über die Lagen der Blickrichtungen zueinander und über die Lage mindestens einer der Blickrichtungen im Referenzraum kann dazu genutzt werden, die Krümmung in Bezug auf das "Blickrichtungskoordinatensystem" in das System des Referenzraums umzurechnen.

Die Lagedaten können durch Sensoren in z.B. dem Schwenkarm oder anderen Teilen der Vorrichtung ermittelt werden und an die Datenauswertungseinheit übermittelt werden oder als feste Messpositionen in der Datenauswertungseinheit gespeichert sein. Letztes bietet sich an, wenn immer wieder dieselben Positionen genutzt werden oder das Kamerasystem unbeweglich ist.

Weiter ist es möglich, dass Lageinformationen über die Bilddaten gewonnen werden, indem z.B. eine Skala oder Referenzpunkte auf den Bilddaten erkennbar sind und die Datenauswertungseinheit diese Information geeignet erfassen und auswerten kann.

Schliesslich kann auch auf eine explizite Bestimmung der Krümmung in drei Dimensionen ganz verzichtet werden: Wenn beispielsweise auf die Vorrichtung zur Erfassung der Drahtkrümmung direkt eine Richteinheit folgt, und die Richteinheit unabhängig voneinander in Richtungen senkrecht zur ersten und zweiten Blickrichtung korrigieren kann, so genügen unter Umständen die "getrennten" Krümmungsdaten.

Eine Drahtrichteinheit umfasst eine Vorrichtung zur Erfassung einer Drahtkrümmung und eine Richtelementsteuerung, die Daten über eine, von der Vorrichtung erfassten Drahtkrümmung empfängt und derart auswertet, dass sie Richtelemente in Abhängigkeit der Daten positionieren und/oder steuern kann, so dass insbesondere die durch die Vorrichtung erfasste Drahtkrümmung zumindest teilweise ausgeglichen werden kann.

Bei den Richtelementen kann es sich um Richtrollen handeln. Es kann aber zum Beispiel auch mit Magneten eine Kraft derart auf den Draht ausgeübt werden, dass dieser sich in der gewünschten Art verformt. Oder es kann sich bei den Richtelementen um Zylinder oder andere feste Objekte handeln, über welche der Draht mit einem gewissen Anpressdruck und in eine bestimmte Richtung gezogen wird.

In einer Ausführungsform handelt es sich bei den Richtelementen um motorisch verstellbare Richtachsen.

Dies erlaubt eine präzise Positionierung. Insbesondere kann jeweils eine Richtachse in eine Richtung senkrecht zu einer Blickrichtung wirken. Dies vereinfacht die Steuerung.

Ein erfindungsgemässes Verfahren zur Bestimmung der Drahtkrümmung, umfasst die folgenden Schritte:
a) Positionierung eines Drahtes in einer erfindungsgemässen Vorrichtung zur Erfassung einer Drahtkrümmung;
b) Erfassung von Bilddaten des Drahtes durch das Kamerasystem;
c) Übermittlung der Bilddaten an die Datenauswertungseinheit;
d) Auswertung der Bilddaten zur Erfassung der Drahtkrümmung durch die Datenauswertungseinheit und insbesondere durch das durch die Datenauswertungseinheit ausführbare Datenauswertungsprogramm.

Bei dem Draht kann es sich um einen Draht mit einer im Wesentlichen glatten Oberfläche, mit einer regelmässig strukturierten Oberfläche oder einer rauen Oberfläche handeln.

Der Draht wird in die Drahtführung eingebracht und zwar in einer Weise, dass seine Begrenzungen senkrecht zur Drahtlängsachse im Bildfeld der mindestens einen Kamera liegen. Die Drahtführung kann beispielsweise eine Öse umfassen, in welche der Draht eingebracht wird. Der Draht kann dann soweit durch die Öse hindurch geschoben werden, bis er vollständig durch das Bildfeld der Kamera läuft. Die Drahtführung könnte aber alternativ oder zusätzlich eine Klemmvorrichtung umfassen: Der Draht kann zum Beispiel im Bildfeld der Kamera und auf einem Teil der Klemmvorrichtung platziert werden und dann erst durch einen zweiten Teil der Klemmvorrichtung fixiert werden.

Die Erfassung von Bilddaten des Drahtes durch das Kamerasystem kann beispielsweise das Auslösen einer Kamera umfassen: Dabei werden bevorzugt die Pixel der Kamera für eine definierte Zeit Licht aus dem Bildfeld ausgesetzt und anschliessend ausgelesen. Es ist aber auch möglich, dass die Pixel dem Licht für eine längere Zeit ausgesetzt sind, aber zu einem bestimmten Zeitpunkt auf einen Referenzwert gesetzt werden und nach einer definierten Zeit ausgelesen werden. Weiter ist es auch möglich, kontinuierlich die Pixel in einer bekannten Reihenfolge und Geschwindigkeit auszulesen. "Auslesen" ist hier breit und in dem Sinne zu verstehen, dass ein Zustand eines Pixels ermittelt wird, der eine Aussage zur Intensität des von diesem Pixel aufgenommenen Lichtes macht. Im Fall eines CCD- oder CMOS-Sensors werden zum Beispiel Ladungen detektiert, welche durch das Bescheinen mit Licht erzeugt werden.

Die Übermittlung der Bilddaten an die Datenauswertungseinheit kann auf unterschiedlichen Wegen geschehen: Über eine Signalleitung, drahtlos oder mit physikalischer Verbindung, können Roh-Bilddaten übertragen werden. Roh-Bilddaten sind dabei direkt die Ergebnisse des Auslesens. Alternativ oder zusätzlich, kann bereits im Kamerasystem eine erste Verarbeitung der Roh-Bilddaten geschehen: Diese können zum Beispiel in ein standardisiertes Format gebracht werden und/oder komprimiert werden. Dies kann die Übertragung beschleunigen und/oder senkt die Anforderungen an die Datenauswertungseinheit. Die Übermittlung von Roh-Bilddaten hat hingegen den Vorteil, dass das Kamerasystem selbst keine oder nur wenige Bauteile benötigt, welche Daten verarbeiten können.

Das Verfahren zum Drahtrichten umfasst das Verfahren zur Bestimmung der Drahtkrümmung, die Übermittelung der Drahtkrümmung an die Richtelementsteuerung; und die Positionierung und/oder Steuerung von Richtelementen in Abhängigkeit der übermittelten Drahtkrümmung, so dass insbesondere der gemessenen Drahtkrümmung zumindest zum Teil entgegen gewirkt wird.

Die Richtelementsteuerung kann auch in der Datenauswertungseinheit integriert sein. Stellt die Datenauswertungseinheit eine Krümmung in eine Richtung fest, so können Richtelemente derart gesteuert oder positioniert werden, dass sie die betroffene Stelle des Drahtes etwas in die Gegenrichtung biegen und somit der Drahtkrümmung entgegen wirken. Der Nutzer kann in einer Ausführungsform wählen, ob Drahtkrümmungen in alle Richtungen oder nur in speziellen Richtungen korrigiert werden sollen. In einer Ausführungsform kann der Nutzer einen Schwellenwert für die gemessene Krümmung festlegen, ab welchem eine Korrektur vorgenommen wird. In einer Ausführungsform wird eine gemessene Krümmung gezielt oder ungezielt nicht vollständig, sondern nur teilweise ausgeglichen: Der Draht besitzt in diesem Fall auch nach dem Durchlaufen der Richtelemente noch eine gewisse Krümmung. Unter "ungezielt" ist im vorliegenden Fall gemeint, dass eine gewisse Restkrümmung akzeptiert wird. In einer Ausführungsform erzeugen die Richtelemente eine gewünschte Drahtkrümmung, die insbesondere in mindestens einer Richtung grösser ist als Null.

In einer Ausführungsform umfasst das Verfahren zum Drahtrichten, dass das oben beschriebene Verfahren zum Drahtrichten mehrfach mit demselben Draht wiederholt wird.

Auf diese Art kann die Krümmung des Drahtes noch weiter reduziert werden. So können in der Wiederholung Krümmungen in vorher noch nicht untersuchten Ebenen berücksichtigt werden. Teilweise ist es auch schwer einzuschätzen, wie weit ein Draht gebogen werden muss, um eine gewünschte Form dauerhaft zu behalten. Hier dient die Wiederholung von Messung und Richten als iteratives Herantasten an die gewünschte Krümmung des Drahtes (diese gewünschte Krümmung kann beispielsweise gleich Null sein). Ausserdem kann eine solche Wiederholung auch nützlich sein, wenn die Richtelemente aus mechanischen oder steuerungstechnischen Gründen den Draht nicht in einem Arbeitsschritt in die gewünschte Krümmung bringen können.

In einer Ausführungsform des Verfahrens zur Bestimmung der Drahtkrümmung, wird das oben beschriebene Verfahren zur Bestimmung der Drahtkrümmung mehrfach mit demselben Draht wiederholt.

Die Wiederholung erlaubt es, die Krümmung in weiteren Ebenen zu erfassen. Werden dieselben Ebenen mehrfach vermessen, so reduziert sich der Messfehler, und aus der Streuung der Messwerte lässt sich der statistische Messfehler abschätzen. Daher kann eine solche wiederholte Messung insbesondere zur Einstellung der Vorrichtung zur Bestimmung der Drahtmessung und zur Einrichtung und zum Kennenlernen der Software genutzt werden. Eine wiederholte Messung ist insbesondere auch dann empfehlenswert, wenn ein Messwert mit grosser Sicherheit gewünscht ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung einer ersten Ausführungsform einer Vorrichtung zur Erfassung der Drahtkrümmung;
- Fig. 2: eine schematische Darstellung einer zweiten Ausführungsform einer Vorrichtung zur Erfassung der Drahtkrümmung, welche einen Schwenkmechanismus nutzt;
- Fig. 3a,b,c: drei Beispiele von Drähten, deren Krümmung mit einer erfindungsgemässen Vorrichtung erfasst werden kann;
- Fig. 4: eine schematische Darstellung einer dritten Ausführungsform einer Vorrichtung zur Erfassung der Drahtkrümmung, welche zwei fest montierte Kameras nutzt;
- Fig. 5a, b: eine schematische Darstellung einer Vorrichtung zur Erfassung der Drahtkrümmung mit Schwenkmechanismus in einer ersten und einer zweiten Position;
- Fig. 6a,b: eine schematische Darstellung einer vierten Ausführungsform einer Vorrichtung zur Erfassung der Drahtkrümmung, welche eine fest montierte Kamera und teilweise bewegliche optische Elemente nutzt;
- Fig. 7: eine schematische Darstellung einer Vorrichtung zur Erfassung der Drahtkrümmung mit Schwenkmechanismus und Schutzvorrichtung;
- Fig. 8: eine schematische Darstellung einer Beleuchtungseinrichtung, welche Licht im Wesentlichen gleichmässig über eine gewisse Fläche abstrahlt;
- Fig. 9: eine schematische Darstellung einer Ausführungsform einer Vorrichtung zum Drahtrichten;
- Fig. 10a: eine Darstellung eines Beispiels von unbearbeiteten Bilddaten;
- Fig. 10b: eine Darstellung binärisierter Bilddaten;
- Fig. 10c: eine schematische Darstellung eines Verfahrens zur Bestimmung von Konturen;
- Fig. 10d: eine schematische Darstellung eines Verfahrens zur Bestimmung von Hüllenpunkten;
- Fig. 10e: eine Darstellung der Konturen und ihrer Umhüllenden; und
- Fig. 10f: eine Darstellung der Bestimmung eines Krümmungsmasses.

Grundsätzlich sind in den Figuren gleiche Teile mit gleichen Bezugszeichen versehen.

### Wege zur Ausführung der Erfindung

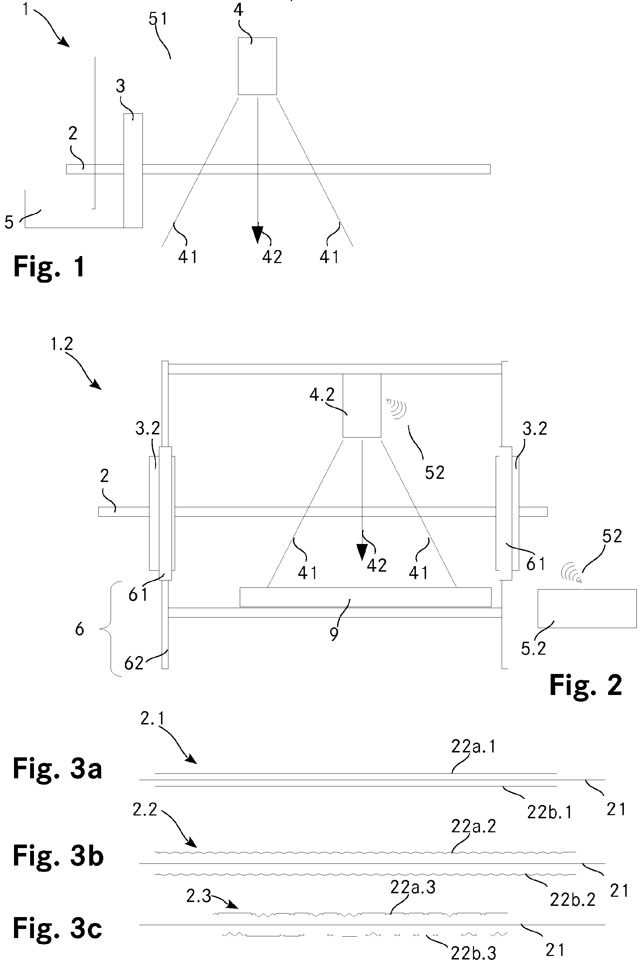

Figur 1 zeigt eine erste Ausführungsform einer Vorrichtung 1 zur Erfassung der Drahtkrümmung. Diese umfasst eine Drahtführung 3, welche einen Draht 2 zumindest in zwei Raumdimensionen fixiert. Hier ist die Drahtführung 3 als Quader ausgebildet, in welchem sich ein Loch befindet, welches nur unwesentlich grösser ist als der Drahtquerschnitt. Der Draht 2 ragt durch dieses Loch und wird somit durch die Begrenzungen des Lochs in zwei Raumdimensionen fixiert. In Richtung seiner Längsachse 21 kann sich der Draht 2 hingegen bewegen.

Eine Kamera 4 kann den Draht 2 als Bilddaten aufnehmen. Die Kamera 4 hat eine Blickrichtung 42. Im vorliegenden Fall ist die Kamera 4 quaderförmig und hat eine Blickrichtung 42 senkrecht zu einer Schmalseite. Die Blickrichtung 42 ist im vorliegenden Fall senkrecht zur Längsachse 21 des Drahtes 2.

Im in der Figur 1 gezeigten Fall weist der Draht 2 keine sichtbare Krümmung auf. Daher ist hier die Längsachse 21 des Drahtes 2 eine Gerade. Im Fall eines stärker gekrümmten Drahtes würde die Blickrichtung 42 der Kamera 4 senkrecht zur verlängerten Längsachse 21 des Drahtes 2 im Bereich in der Drahtführung 3 sein.

Die Daten, Bilddaten und gegebenenfalls auch weitere Daten wie Positionsangaben, Betriebsparameter der Kamera 4 oder Umweltparameter, werden über ein Kabel 51 an die Datenauswertungseinheit 5 übertragen. Bei dem Kabel 51 kann es sich um ein Ethernet-Kabel handeln.

Figur 2 zeigt eine zweite Ausführungsform einer Vorrichtung zur Erfassung der Drahtkrümmung 1.2. Ein Draht 2 wird wiederum in einer Drahtführung 3.2 geführt. Die Drahtführung 3.2 besteht in diesem Beispiel aus zwei Scheiben einer gewissen Dicke, welche je ein Loch aufweisen, dessen Querschnitt nur unwesentlich grösser ist als der Querschnitt des Drahtes 2. Die gezeigte Drahtführung 3.2 ist beispielhaft. Die Erfindung kann auch mit der Drahtführung 3 aus Figur 1 realisiert werden oder mit anderen Drahtführungen, wie sie im Folgenden noch vorgestellt werden und/oder dem Fachmann bekannt sind.

Ungefähr an denselben Stellen, an welcher sich die beiden Teile der Drahtführung 3.2 befinden, ist nun zusätzlich eine Schwenkeinheit 6 montiert. Diese umfasst im hier gezeigten Beispiel zwei Grundteile 61, auf welchen ein Schwenkarm 62 um die Längsachse 21 (gezeigt in Fig. 3a-c) des Drahtes 2 geschwenkt werden kann. Die Grundteile 61 können zum Beispiel auch die Drahtführung 3.2 aufnehmen, und sie bewegen sich nicht in Bezug zur Drahtführung 3.2.

Der Schwenkarm 62 umfasst in dieser Ausführungsform senkrechte und waagerechte Träger. Die senkrechten Träger sind auf einer Seite an den Grundteilen 61 befestigt, wobei es sich bei der Befestigung um eine Verbindung handelt, welche die Bewegung des Schwenkarms 62 gegenüber dem Grundteil 61 ermöglicht. Die senkrechten Träger tragen hier zwei waagerechte Träger, die sich einander gegenüber, auf jeweils einer Seite des Drahtes 2, liegen. An einem der waagerechten Träger ist die Kamera 4.2 befestigt. Die Blickrichtung 42 dieser Kamera 4.2 ist wiederum in etwas senkrecht zur Längsachse 21 (Fig. 3a-c) des Drahtes 2 an den Stellen in der Drahtführung 3.2. Die Kamera 4.2 erfasst einen Bildbereich, in welchem auch die Begrenzungen 22a, 22b (Fig. 3a-c) des Drahtes 2 liegen. Es handelt sich dabei um die Begrenzungen 22a, 22b des Drahtes, die parallel zur Drahtlängsachse 21 verlaufen (siehe Fig. 3a-c). Der Bildbereich wird durch die Grenzen 41 begrenzt. Die Grenzen 41 sind in der Regel durch die Optik der Kamera 4.2 oder Blenden gegeben.

An dem der Kamera 4.2 gegenüberliegenden waagerechten Träger ist eine flächige Beleuchtungseinrichtung 9 befestigt. Diese strahlt in ihrem gesamten Bereich, welcher im Bildbereich der Kamera 4.2 liegt, im Wesentlichen gleichmässig Licht ab.

In dieser Ausführungsform werden die Daten der Kamera 4.2, also Bilddaten aber möglichweise auch Positionsangaben, Betriebsparameter der Kamera 4.2 oder Umweltparameter, über einen kabellosen Kanal 52 an die Datenauswertungseinheit 5.2 übertragen. Auch eine Übertragung via Kabel 51 (siehe Fig.1) wäre möglich. Ein solches Kabel 51 könnte beispielsweise durch oder entlang des Schwenkarms 61 geführt werden. Die Beweglichkeit des Schwenkarms könnte dabei erhalten bleiben, indem die Daten über Schleifkontakte oder geeignet lange Kabel zu einem Anschlusskabel im Grundteil übertragen werden. Diese Anschlusskabel könnten dann bis zur Datenauswertungseinheit 5.2 verlaufen und die Daten dorthin übertragen. Auf analogem Weg kann die Energieversorgung von Kamera 4.2 und Beleuchtungseinheit 9 sichergestellt werden. Batterien oder andere mobile Energiespeicher wären eine Alternative zu einer Energieversorgung via Kabel.

Die Datenauswertungseinheit 5.2 kann bei einer kabellosen Datenübertragung 52 weitgehend unabhängig von der Position der übrigen Bauteile platziert werden.

Die Figuren 3a, 3b und 3c zeigen drei Beispiele von Drähten 2, deren Krümmung mit einer erfindungsgemässen Vorrichtung bestimmt werden kann:
Figur 3a zeigt einen glatten Draht 2.1 mit rundem Querschnitt. Er hat eine Längsachse 21. Diese könnte prinzipiell gebogen sein. Hier ist allerdings ein gerader Draht 2 gezeigt, so dass auch die Längsachse 21 eine Gerade ist. Die Längsachse 21 verläuft bevorzugt an jeder Stelle durch den Flächenschwerpunkt des Querschnitts. Der Draht 2.1 hat in der gezeigten Aufsicht zwei Begrenzungen 22a.1, 22b.1. Diese verlaufen bei einem glatten Draht 2 parallel zur Längsachse 21.

Figur 3b zeigt einen gleichmässig strukturierten Draht 2.2. Er hat eine Längsachse 21. Diese könnte prinzipiell gebogen sein. Hier ist allerdings ein gerader Draht 2.2 gezeigt, so dass auch die Längsachse 21 eine Gerade ist. Die Längsachse 21 verläuft bevorzugt an jeder Stelle durch den Flächenschwerpunkt des Querschnitts. Der Draht 2.2 hat in der gezeigten Aufsicht zwei Begrenzungen 22a.2, 22b.2. Diese weisen bei einem gleichmässig strukturierten Draht 2.2 eine gleichmässige, sich wiederholende Struktur auf.

Figur 3c zeigt einen ungleichmässig strukturierten oder rauen Draht 2.3. Er hat eine Längsachse 21. Diese könnte prinzipiell gebogen sein. Hier ist allerdings ein gerader Draht 2.3 gezeigt, so dass auch die Längsachse 21 eine Gerade ist. Die Längsachse 21 verläuft bevorzugt durch den Volumenschwerpunkt eines kurzen, sich gleitend verschiebenden Stücks des Drahts 2.3. Der Draht 2.3 hat in der gezeigten Aufsicht zwei Begrenzungen 22a.3, 22b.3. Diese weisen bei einem ungleichmässig strukturierten Draht 2.3 ein ungleichmässiges Muster auf. Die Oberfläche und daher auch die Begrenzungen 22a.3, 22b.3 dieses Drahtes 2.3 sind rau.

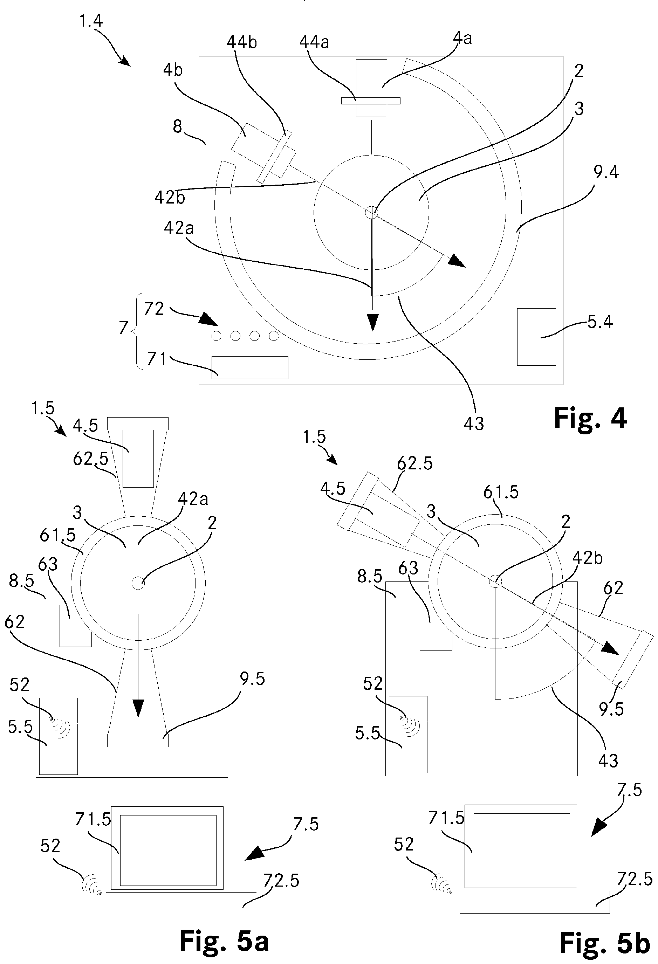

Figur 4 zeigt eine dritte Ausführungsform einer Vorrichtung zur Erfassung der Drahtkrümmung 1.4. Anders als in den Figuren 1 und 2 ist die Ansicht nun so gedreht, dass der Betrachter in Richtung der Längsachse 21 des Drahtes 2 innerhalb der Drahtführung 3 blickt. Der Draht 2 ist daher hier im Querschnitt zu sehen und erscheint kreisförmig. Die Drahtführung 3 ist hier durch eine kreisförmige Scheibe mit einem Loch, welches nur unwesentlich und hier nicht erkennbar grösser ist als der Querschnitt des Drahtes 2. Die Drahtführung 3 ist in einem Podest 8 integriert. Das Podest 8 trägt weiter zwei fest montierte Kamerahalterungen 44a und 44b. Die Kamerahalterungen 44a und 44b können Kameras 4a und 4b in einer bekannten und festen Ausrichtung zueinander und zur Drahtführung halten. In Figur 4 sind die Kameras 4a und 4b in den Kamerahalterungen 44a und 44b befestigt. Die Kamera 4a hat die Blickrichtung 42a und die Kamera 4b hat die Blickrichtung 42b. Beide Blickrichtungen 42a und 42b zeigen von der jeweiligen Kamera 4a oder 4b in Richtung auf die Drahtlängsachse 21 des Drahtes 2. Die beiden Blickrichtungen 42a und 42b schliessen einen Winkel 43 ein, der grösser als 0° ist. In Figur 4 ist der Winkel 43 zwischen den Blickrichtungen 42a,b der Kameras 4a und 4b gleich 60°.

Den Kameras 4a und 4b gegenüber, auf der anderen Seite des Drahtes 2, liegt eine gemeinsame Beleuchtungseinrichtung 9.4. Die Beleuchtungseinrichtung 9.4 hat hier die Form eines Zylindersegments. Die Beleuchtungseinrichtung 9.4 könnte auch die Form eines Kugel- oder Quader-segments haben.

Weiter ist im Podest 8 auch die Datenauswertungseinheit 5.4 integriert. Figur 4 zeigt sie in der unteren rechten Ecke des Podestes 8, aber der Ort der Datenauswertungseinheit 5.4 kann auch beliebig anders, auch ausserhalb des Podestes 8, gewählt werden.

Weiter sind zwei Benutzerschnittstellen 7 gezeigt: Es handelt sich um ein Display 71 und ein Eingabegerät 72 in Form mehrerer Dreh- und/oder Druckknöpfe. Diese Benutzerschnittstellen 7 sind mit der Datenauswertungseinheit 5.4 verbunden und erlauben es dem Nutzer, verschiedene Einstellungen, die zur Datenauswertung gebraucht werden, einzustellen und Ergebnisse wie beispielsweise die Drahtkrümmung abzulesen.

Die Kameras 4a und 4b übertragen die gewonnenen Bilddaten über Kabel im Inneren des Podestes 8 oder kabellos an die Datenauswertungseinheit 5.4. Die Kamerahalterungen 44a und b können dazu mit geeigneten Schnittstellen ausgerüstet sein oder es können nicht gezeigte Steckdosen oder ähnliche Anschlüsse am Podest 8 oder direkt an der Datenauswertungseinheit 5.4 angebracht sein.

An dem Podest 8 können weitere Schnittstellen zur Datenauswertungseinheit 5.4 vorliegen. An solchen weiteren Schnittstellen kann ein Benutzer weitere externe Geräte wie Computer, Messgeräte, Speicher oder Eingabegeräte anschliessen.

Mögliche Abwandlungen dieser Ausführungsformen könnten versetzbare Kamerahalterungen 44 a,b, umfassen. Die Datenauswertungseinheit 5.4 kann derart konstruiert sein, dass sie feststellen kann, wo eine Kamerahalterung 44a,b montiert ist. Auf diese Art kann der Datenauswertungseinheit 5.4 die Information zur Verfügung gestellt werden, in welchem Winkel die Kameras zueinander und in Bezug auf das Podest angeordnet sind.

Auch können andere Drahtführungen 3 oder Beleuchtungseinrichtungen 9.4 verwendet werden. So könnte zum Beispiel auch eine Beleuchtungseinrichtung 9.4, zusammen mit der Kamera 4a, 4b, an der Kamerahalterung 44a,b befestigt sein.

Weiter könnte auch eine Kamera 4a nacheinander in beiden Halterungen 44a und 44b genutzt werden.

Figuren 5a und 5b zeigen eine Vorrichtung zur Erfassung der Drahtkrümmung 1.5 mit einer Schwenkeinheit 6. Beide Figuren zeigen dieselbe Vorrichtung 1.5, aber zu anderen Zeiten: In Figur 5a befindet sich die Kamera 4.5 in einer ersten Position und hat eine Blickrichtung 42a in Bezug auf das Podest 8.5. In Figur 5b befindet sich die Kamera 4.5 in einer zweiten Position und hat eine Blickrichtung 42b in Bezug auf das Podest 8.5. Die Blickrichtungen 42a und b schliessen einen Winkel 43 von hier beispielsweise 60° ein.

Die Figuren 5a und 5b zeigen die Vorrichtung 1.5, wie Figur 4, so, dass der Betrachter entlang der Drahtlängsachse 21 des in der Drahthalterung 3 gehalten Drahtstückes 2 blickt. Der Draht 2 erscheint hier daher als Kreis. Die Drahthalterung 3 ist in diesem Fall gleich der Drahthalterung 3 aus Figur 4. An dem Podest 8 ist neben der Drahthalterung 3 nun ebenfalls ein Grundteil 61.5 einer Schwenkeinheit befestigt. An dem Grundteil 61.5 ist ein Schwenkarm 62.5 befestigt, der durch einen Antrieb 63 gesteuert und angetrieben, sich um das Grundteil 61.5 bewegen kann. Diese Bewegung ist eine Rotation um die Längsachse 21 des Drahtes 2 in der Drahthalterung 3.

Der Schwenkarm 62.5 erstreckt sich, ausgehend vom Grundteil 61.5, in zwei gegensätzliche Richtungen. Auf einer Hälfte des Schwenkarms 62.5 ist die Kamera 4.5 befestigt und zwar so, dass sie, unabhängig von der Stellung des Schwenkarms 62.5, eine Blickrichtung 42 hat, welche senkrecht auf die Längsachse 21 des Drahtes 2 in der Drahtführung 3 steht. Auf der anderen Hälfte des Schwenkarms 62.5 ist eine Beleuchtungseinrichtung 9.5 befestigt, die Licht in Richtung Kamera 4.5 aussenden kann.

Im Podest 8.5 ist auch in diesem Beispiel eine Datenauswertungseinheit 5.5 angeordnet.

Bilddaten der Kamera 4.5 können über Kabel, welche entlang dem Schwenkarm 62.5 und durch das Grundteil 61.5 der Schwenkeinheit verlaufen, zur Datenauswertungseinheit 5.5 gelangen. Über ähnlich verlaufende Kabel kann auch die Energieversorgung von Kamera 4.5 und Beleuchtungseinrichtung 9.5 realisiert werden. Allerdings kann die Datenübertragung auch kabellos geschehen und die Energieversorgung induktiv oder durch Energiespeicher wie beispielsweise Batterien oder Akkus, und somit ebenfalls kabellos, erfolgen. Es ist auch möglich, dass eine Daten- und/oder Energieübertragung nur in speziellen Positionen des Schwenkarms 62.5 (z.B. in einer Parkposition) geschieht und während der übrigen Zeit Energie- und Datenspeicher Energie liefern und Daten aufnehmen.

In der gezeigten Ausführungsform ist eine Benutzerschnittstelle 7.5 zur Datenauswertungseinheit 5.5 durch eine drahtlose Verbindung 52 an die Datenauswertungseinheit 5.5 angeschlossen. Die Benutzerschnittstelle 7.5 ist hier ein PC mit einem Bildschirm 71.5 als Beispiel eines Ausgabegerätes und einer Tastatur 72.5 als Beispiel eines Eingabegerätes.

Es wäre ebenfalls möglich, die Datenauswertungseinheit 5.5 in den gezeigten PC zu verlagern. Dazu könnten am Podest 8.5 auch Anschlüsse zur Datenübertragung angebracht sein. Weiter könnte auch direkt bei der Kamera 4.5 am Schwenkarm 62.5 oder im Podest 8.5 ein mobiler Datenspeicher sein, auf welchen die Bilddaten und mögliche weitere Daten gespeichert werden. Die Datenübertragung könnte durch ein Umsetzen des mobilen Datenspeichers an einen Computer geschehen, der anschliessend als Datenauswertungseinheit 5.5 genutzt wird.

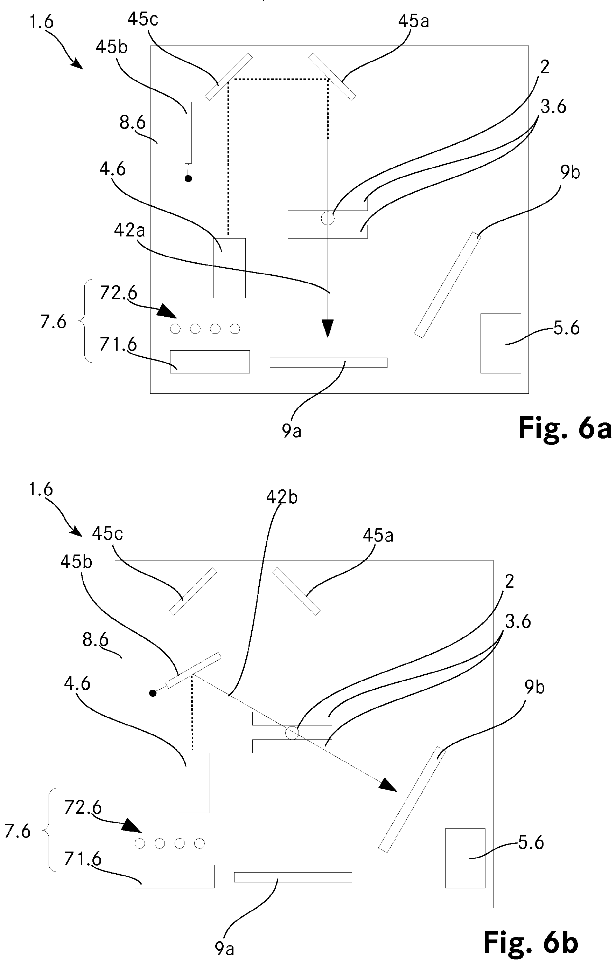

Die Figuren 6a und 6b zeigen eine Ausführungsform einer Vorrichtung 1.6, in der eine Anordnung optischer Elemente 45a,b,c es erlaubt, mit nur einer Kamera 4.6 und ohne diese zu bewegen, Bilddaten vom Draht 2 aus zwei verschiedenen Blickrichtungen 42a, b zu erhalten:
Ähnlich wie in Figur 4 ist wiederum ein Podest 8.6 mit Benutzerschnittstellen 7.6 in der Form eines Displays 71.6 und Dreh- und/oder Druckknöpfen 72.6 und einer integrierten Datenauswertungseinheit 5.6 gezeigt.

Es gibt jeweils eine Beleuchtungseinheit 9a, b für jede Blickrichtung 42a und 42b. Bei den Beleuchtungseinheiten 9a und 9b handelt es sich um flache Elemente, deren Hauptausdehnung jeweils senkrecht zur Blickrichtung 42a und 42b ausgerichtet ist.

Die Drahtführung 3.6 ist hier durch zwei Klemmflächen realisiert, zwischen denen der Draht 2 eingeklemmt ist.

Das Kamerasystem dieser Ausführungsform umfasst drei Spiegel 45a, b und c. Der Spiegel 45b kann dabei um eine Achse gekippt werden und zwei Stellungen einnehmen. Figur 6a zeigt die Vorrichtung mit dem Spiegel in einer ersten Stellung und Figur 6b zeigt die Vorrichtung mit dem Spiegel in einer zweiten Stellung.

In der ersten Stellung, also in Figur 6a, befindet sich der Spiegel 45b ausserhalb des optischen Pfades. Das Bild des Drahts wird über zwei fest montierte Spiegel 45a und 45c auf den Detektor der Kamera 4.6 geleitet. Damit ist die effektive Blickrichtung 42a der Kamera 4.6 bzw. des Kamerasystems, bestehend aus Kamera 4.6 und den Spiegeln 45a, b und c, um 180° gegenüber der Ausrichtung der Kamera 4.6 gedreht.

In der zweiten Stellung, also in Figur 6b, befindet sich der Spiegel 45b im optischen Pfad. Die fest montierten Spiegel 45a und 45c liegen nun nicht mehr im optischen Pfad zwischen Draht 2 und Kamera 4.6, da die Rückseite des beweglichen Spiegels 45b diesen unterbricht. Das Bild des Drahts 2 wird über den Spiegel 45b auf den Detektor der Kamera 4.6 geleitet. Die Normale der reflektierenden Fläche des Spiegels 45b steht in einem 30°-Winkel zur Ausrichtung der Kamera 4.6. Daher ist die effektive Blickrichtung 42b der Kamera 4.6 bzw. des Kamerasystems, bestehend auf Kamera 4.6 und den Spiegeln 45a, b und c, um 60° gegenüber der Ausrichtung der Kamera 4.6 gedreht.

Durch den Wechsel zwischen der ersten und zweiten Spiegelposition lässt sich der Draht 2 also aus zwei verschiedenen Blickrichtungen 42a,b betrachten, die einen Winkel von mehr als 0°, in diesem Beispiel von 60°, einschliessen.

Wird der Spiegel 45b auf derselben Höhe montiert wie der Draht 2 in der Drahtführung 3.6 und wenn er sich in einen Winkel von 45° gegenüber der Ausrichtung der Kamera 4.6 bringen lässt, so schliessen die beiden Blickrichtungen 42a,b einen Winkel von 90° ein.

Anstelle von einfachen, flachen Spiegeln können mit gekrümmten Spiegeln und/oder Linsen ähnliche optische Systeme konstruiert werden, die noch bessere Abbildungseigenschaften aufweisen. Die Nutzung von polarisiertem und/oder farbigem Licht und Strahlteilern und/oder Filtern kann es ermöglichen, beide Blickrichtungen gleichzeitig zu beobachten und vollständig auf bewegliche Elemente zu verzichten: Eine solche Ausführungsform kann Figur 6b ähneln: Reflektiert der Spiegel 45b beispielweise rotes Licht, während er für blaues Licht transparent ist, so treffen Bilder beider Blickrichtungen gleichzeitig auf den Detektor der Kamera 4.6: ein blaues Bild zeigt den Draht 2 aus der ersten Beobachtungsrichtung 42a, ein rotes Bild zeigt den Draht 2 aus der zweiten Beobachtungsrichtung 42b. Wenn die Kamera 4.6 farbempfindlich ist, so kann sie oder die Datenauswertungseinheit 5.5 die beiden Bilder trennen und wie in den anderen Ausführungsformen zunächst getrennt analysieren.

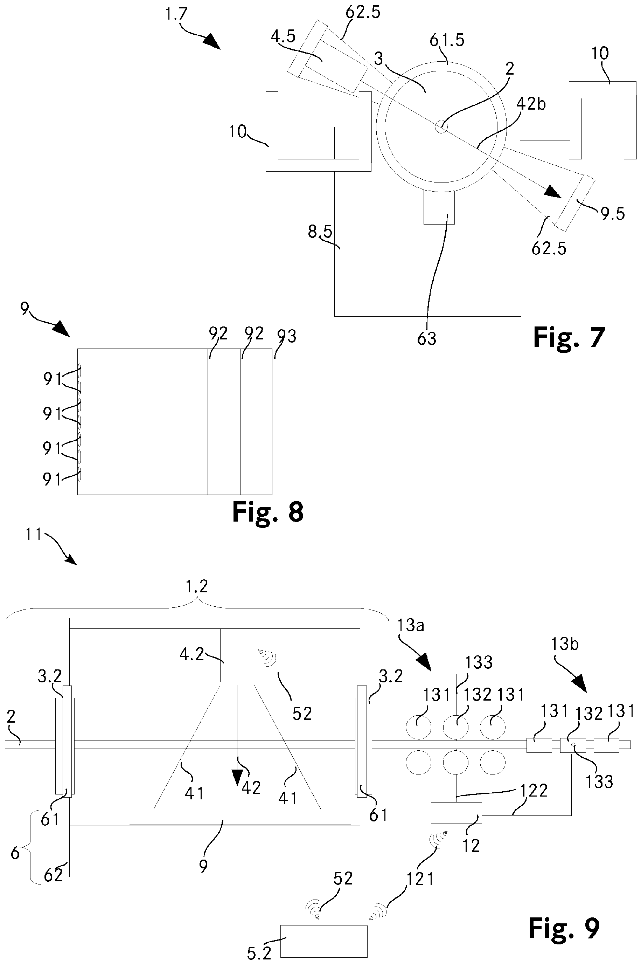

Figur 7 zeigt eine Vorrichtung 1.7 zur Erfassung der Drahtkrümmung mit Schwenkmechanismus und Schutzvorrichtung 10. Die Vorrichtung entspricht im Wesentlichen der bereits in den Figuren 5a und 5b gezeigten Ausführungsform. Gegenüber der Ausführungsform der Figuren 5a und 5b wurde eine Schutzvorrichtung 10 ergänzt.

Die Schutzvorrichtung 10 besteht aus zwei dreiseitig offenen Boxen. Die Schwenkeinheit , bestehend aus Schwenkarmen 62.5 und Grundteil 61.5, kann wie in Figur 2 gezeigt gestaltet sein. Die dreiseitig offenen Boxen der Schutzvorrichtung 10 haben eine Seitenlänge, die kleiner ist als der Abstand zwischen den zwei Schwenkarmen 62.5, und sind so positioniert, dass sich die Schwenkarme 62.5 rechts und links neben den Boxen befinden, wenn die Schwenkeinheit sich in der Parkposition befindet. In der Parkposition befinden sich die Kamera 4.5 und, wenn vorhanden, die Beleuchtungseinheit 9.5, innerhalb der Boxen. Die Boxen schützen die Kamera 4.5 und die Beleuchtungseinheit 9.5 dabei auf drei Seiten. Die offenen Schmalseiten der Box können im Wesentlichen durch die Schwenkarme 62.5 abgedeckt werden. Ein Schirm, welcher direkt an der Kamera 4.5 oder der Beleuchtungseinheit 9.5 oder dem Träger, auf dem diese Teile je angebracht sind, befestigt ist und passende Ausmasse hat, kann in der Parkposition die verbleibende, offene Seite der Box im Wesentlichen abdecken. Kamera 4.5 und Beleuchtungseinheit 9.5 können so im Wesentlichen vollständig geschützt werden. Bei einer anderen, zum Beispiel einseitigen, Konstruktion der Schwenkarme können auch die Boxen passend konstruiert sein. So können sie zum Beispiel nur eine offene Schmalseite aufweisen oder einen schmalen, zentralen "Durchgang" für einen zentralen Schwenkarm, welcher in Rotationsrichtung vor der Kamera 4.5 oder vor der Beleuchtungseinheit 9.5 liegt. Auch kann ein zentraler Schwenkarm in Rotationsrichtung hinter der Kamera 4.5 oder hinter der Beleuchtungseinheit 9.5 liegen: Ein derart angeordneter Schwenkarm muss nicht in den Bereich der Box hineinreichen und so können die Boxen in diesem Fall mit nur einer offenen Seite auskommen.

In Figur 7 befindet sich die Parkposition in der Horizontalen. Diese Ausrichtung ist willkürlich. Die Parkposition kann eine beliebige, für Kamera 4.5 und gegebenenfalls Beleuchtungseinheit 9.5, durch die Schwenkeinheit erreichbare Position sein.

Auch fest montierte Kameras oder Kamerasysteme wie beispielsweise in den Figuren 4 und 6a, b gezeigt, können einen Schutzvorrichtung haben: Es kann sich dabei beispielsweise um eine Blende handeln. Das Kamerasystem oder die Kamera 4, deren Detektor und/oder Optik durch eine Blende abgedeckt und geschützt wird, kann durch ein Gehäuse, welches die übrigen Bereiche und Teile bedeckt, vor Verschmutzungen bewahrt werden. Eine Parkposition ist dann nicht durch eine Kamerastellung, sondern durch die Positionierung der Blende gegeben. In diesem Fall bewegt ein geeigneter Mechanismus (z.B. in Form eines Filterrades) die Blende als Schutzvorrichtung in die Parkposition und erlaubt es auch, diese wieder zu verlassen.

Figur 8 zeigt eine mögliche Konstruktion einer Beleuchtungseinrichtung 9, welche im Wesentlichen gleichmässig über eine abstrahlende Fläche 93 Licht abstrahlen kann. Die Beleuchtungseinrichtung 9 umfasst eine Vielzahl kleiner Lichtquellen 91. Diese sind auf der Rückseite eines Hohlraums angebracht. In einem gewissen Abstand von den Lichtquellen 91 ist ein erster opaker Schirm 92 angebracht und in einem weiteren Abstand, noch weiter von den Lichtquellen 91 entfernt, ein zweiter opaker Schirm 92. Die abstrahlende Fläche 93 kann ebenfalls opak sein. Grössere Abstände und weitere Schirme und mehr, kleine Lichtquellen 91 können die gleichmässig abstrahlende Fläche 93 noch gleichmässiger abstrahlen lassen.

Insbesondere aus der Astronomie und der Fotografie sind weitere Methoden und Hilfsmittel bekannt, mit denen sich gleichmässig ausgeleuchtete Flächen erzeugen lassen. Diese lassen sich auch im Rahmen der vorliegenden Erfindung nutzen.

Figur 9 zeigt eine Ausführungsform einer Vorrichtung zum Drahtrichten 11: Ein erster Teil wird durch eine Vorrichtung zur Erfassung der Drahtkrümmung 1.2, wie sie bereits in Figur 2 und der dazugehörenden Beschreibung beschrieben wurde, gebildet. Der Draht 2 durchläuft die Vorrichtung zur Erfassung der Drahtkrümmung 1.2. Anschliessend passiert der Draht zwei Richtelemente 13a und 13b. Die Richtelemente 13a können eine Krümmung in einer zweiten Richtung und die Richtelemente 13b eine Krümmung in einer ersten Richtung ausgleichen. Dazu umfassen die hier beispielhaft gezeigten Richtelemente 13a, 13b je zwei Paar Drahtführungsrollen 131 und je ein Paar Drahtbiegerollen 132. Die Paare der Drahtbiegerollen 132 sind dabei jeweils an einer Führung 133 befestigt. Diese Führungen 133 sind motorisiert und können von einer Richtelementsteuerung 12 angesteuert werden. Die Richtelementsteuerung 12 ist über Signalleitungen 122 mit den Führungen 133 verbunden. Die Richtelementsteuerung 12 könnte auch dazu genutzt werden, die Rotationsgeschwindigkeit aller oder einzelner Rollen 131, 132 zu bestimmen und zu kontrollieren und so einen Vortrieb des Drahtes 2 zu erzeugen.

Die Richtelementsteuerung 12 erhält Daten über die gemessene Drahtkrümmung von der Datenauswertungseinheit 5.2. Die Datenübertragung zwischen Richtelementsteuerung 12 und Datenauswertungseinheit 5.2 kann über einen drahtlosen Kanal 121 geschehen.

Neben der hier gezeigten Ausführungsform können auch alle anderen erfindungsgemässen Vorrichtungen zur Erfassung der Drahtkrümmung den Richtelementen 13a und 13b vorgeschaltet sein. Weiter können die Richtelemente 13a und 13b auch anders gestaltet sein: Anstelle von Rollen können auch Kanten oder elektromagnetische Kräfte genutzt werden, um den Draht zu richten. Jede dem Fachmann bekannte Vorrichtung zum gesteuerten Richten von Draht kann in Verbindung mit einer erfindungsgemässen Vorrichtung zur Erfassung der Drahtkrümmung genutzt werden.

In Figur 9 und den anderen Abbildungen werden Daten in manchen Fällen über Kabel und in manchen Fällen kabellos übertragen. In jedem dieser Fälle kann eine Übertragung via Kabel auch durch eine kabellose Übertragung ersetzt werden und umgekehrt.

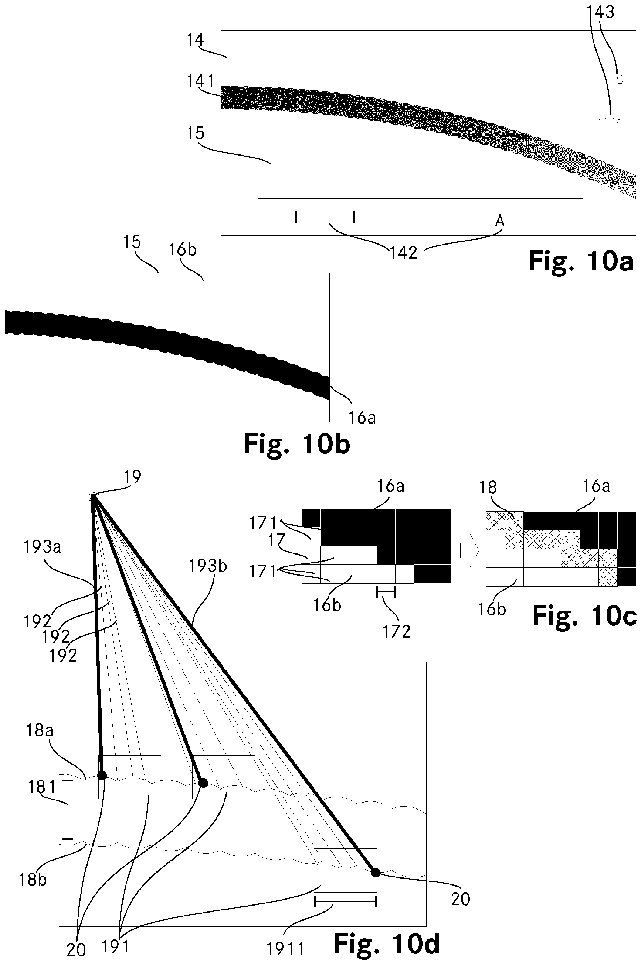

Die Figuren 10a bis 10f illustrieren die Verarbeitungsschritte, die die Datenverarbeitungseinheit 5 durchführt:
Figur 10a zeigt eine Illustration von unbearbeiteten Bilddaten 14. Auf diesen Bilddaten 14 findet sich ein Abbild des Drahtes 141, Beschriftungen und Markierungen 142 und Bildfehler 143. Bildfehler 143 können beispielsweise durch unerwünschte Verschmutzung, Defekte in optischen Elementen, dem Detektor oder beim Auslesen der Daten entstehen. Beschriftungen und Markierungen 142 können zum Beispiel auf der Beleuchtungseinrichtung 9 angebracht sein und helfen, Bilddaten 14 einer Blickrichtung zuzuordnen. Messungen von Intensitäten, Farben oder Längen können ebenfalls durch Markierungen vereinfacht oder kalibriert werden.

Aus den unbearbeiteten Bilddaten 14 wird ein Bildausschnitt 15 ausgeschnitten. Der Ausschnitt kann bevorzugt so gewählt werden, dass möglichst viele Bildfehler und Artefakte ausserhalb des Bildausschnittes 15 liegen und dieser trotzdem noch ein möglichst langes Stück des Drahtes 2 erfasst.

Figur 10b zeigt das Ergebnis, nachdem aus den unbearbeiteten Bilddaten 14 der Bildausschnitt 15 gewonnen wurde und die Bilddaten binärisiert wurden. Das Binärisieren der Bilddaten geschieht dabei, indem alle Daten unterhalb oder gleich einer Schwelle einen ersten Wert 16b und alle Daten oberhalb der Schwelle einen zweiten Wert 16a zugeordnet erhalten.

In einem nächsten Schritt, gezeigt in Figur 10c, werden aus den binärisierten Daten des Bildausschnitts 15 die Konturen 18 bestimmt. Figur 10c zeigt, zu Illustrationszwecken, nur einen sehr kleinen Ausschnitt der Bilddaten aus dem Bildausschnitt 15. Jeder Bildpunkt 17 ist hier als Kästchen dargestellt. Der Wert des einzelnen Bildpunktes 17 ist durch seine Farbe angezeigt: Weisse Kästchen haben einen ersten Wert 16b und schwarze Kästchen einen zweiten Wert 16a.

Im vorliegenden Fall wurde entschieden, die schwarzen Kästchen, also Bildpunkte 17 mit dem zweiten Wert 16a zu prüfen. Für jedes schwarze Kästchen, bzw. jeden Bildpunkt 17 mit zweitem Wert 16a, wird nun ermittelt, ob seine direkten Nachbarn 171 alle ebenfalls schwarz sind, also ebenfalls alle den zweiten Wert 16a haben. Falls dies nicht der Fall ist, soll der getestete Bildpunkt 17 zur Kontur 18 gehören. Die Bildpunkte 17, die zur Kontur 18 gehören, sind im rechten Feld der Figur 10c schraffiert markiert.

Direkte Nachbarn 171 eines Bildpunktes 17 sind alle Bildpunkte 17, die sich mit dem betreffenden Bildpunkt 17 eine gemeinsame Seite oder eine gemeinsame Ecke teilen. Die Bildpunkte 17 haben hier alle dieselbe Länge 172. Die Länge eines Bildpunktes ist bevorzugt seine Ausdehnung in die Richtung der Drahtlängsachse eines perfekt geraden und in der Drahtführung 3 geführten Drahtes 2.

Figur 10d stellt dar, wie bei bekannten Konturen 18a und 18b die Hüllenpunkte 20 gefunden werden. Dazu wird ein Referenzpunkt 19, weit entfernt von beiden Konturen 18a und 18b, gewählt. Weiter wird die Grösse eines Testbereichs 191 festgelegt, insbesondere seine Länge 1911. Im vorliegenden Fall entspricht die Länge 1911 des Testbereichs 191 in etwa dem 1.75fachen einer regelmässigen Struktur beider Konturen 18a, 18b.

Von jedem Bildpunkt 17, der zu einer Kontur 18a oder 18b gehört, wird der Abstand 192 oder 193 zum Referenzpunkt 19 bestimmt. Bei der ersten Kontur 18a, also derjenigen Kontur 18 die näher beim Referenzpunkt 19 liegt, wird von allen Abständen 192, 193a von Bildpunkten 17 der Kontur 18a, die innerhalb des betreffenden Testbereichs 191 liegen, der kleinste Abstand 193a gesucht. Der betreffende Bildpunkt ist ein Hüllenpunkt 20 der ersten Kontur 18a. Der Testbereich 191 wird um mindestens die Länge 172 eines Bildpunktes oder um ein Vielfaches davon verschoben und die Bestimmung eines Hüllenpunktes 20 wird wiederholt.

Nachdem die gesamte erste Kontur 18a auf diese Art abgetastet wurde, wird das Verfahren mit der zweiten Kontur 18b wiederholt. Dabei wird nun aber der grösste Abstand 193b gesucht, um die Hüllenpunkte 20 der zweiten Kontur 18b zu bestimmen.

181 ist der geschätzte mittlere Abstand der beiden Konturen 18a und 18b. Der mittlere Abstand der beiden Konturen kann beispielsweise ermittelt werden, indem an einer zufällig ausgewählten, aber ausreichend grossen Anzahl von Stellen der Abstand der beiden Konturen berechnet wird. Alternativ könnte auch die Anzahl Bildpunkte gezählt werden, welche im binärisierten Bildausschnitt den zweiten Wert haben und die Zahl durch die, in Anzahl Bildpunktlängen 172 angegebene, Länge des Bildausschnitts 15 geteilt. Die Länge des Bildausschnitts 15 kann dabei wiederum entlang der Längsachse eines ideal geraden und in der Drahtführung 3 eingespannten Drahtes 2 ermittelt werden.

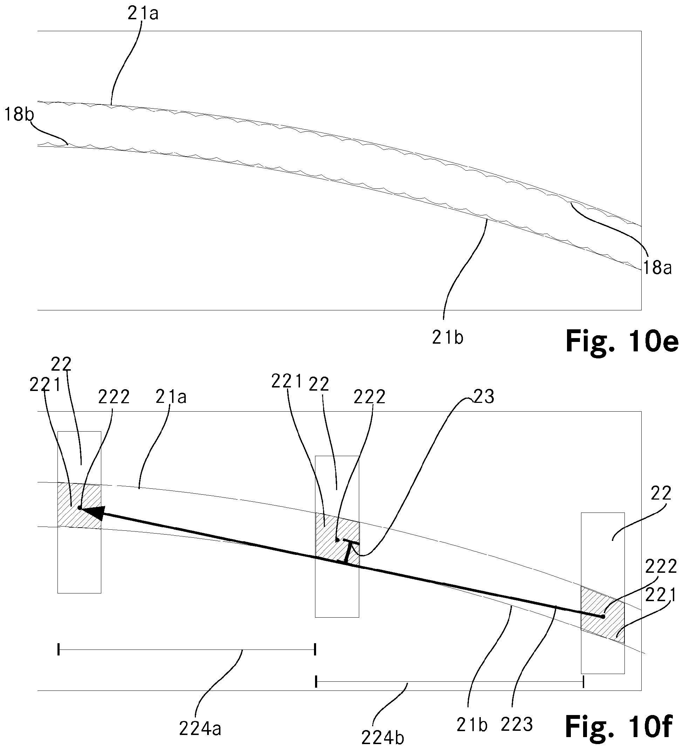

In Figur 10e wird schliesslich ein mögliches Ergebnis gezeigt, wenn eine Interpolation zwischen den verschiedenen Hüllenpunkten vorgenommen wird. 18a und 18b sind die ursprünglich bestimmten Konturen. 21a und 21b sind die aus der Interpolation der Hüllenpunkte folgenden Konturhüllen.

Wie aus Konturhüllen ein Krümmungsmass ermittelt werden kann, zeigt Figur 10f: Es werden drei Messfenster 22 mit je derselben Grösse festgelegt. Es wird der Flächenschwerpunkt 222 aller Bildpunkte 17 gebildet, welche sowohl innerhalb des betreffenden Messfensters 22 liegen als auch zwischen den Konturen 18a, 18b oder den Konturhüllen 21a, 21b. Es ergibt sich also ein Flächenschwerpunkt 222 in jedem der Messfenster 22. Es wird ein Vektor 223 bestimmt, welcher die beiden am weitesten voneinander entfernten Flächenschwerpunkte 222 verbindet. Der grösste Abstand 23 eines Flächenschwerpunktes 222 von diesem Vektor 223 ist ein mögliches Mass für die Drahtkrümmung. In dem hier gezeigten Fall von genau drei Messfenstern 22, definieren ja zwei Flächenschwerpunkte 222 den Vektor 223, so dass der grösste Abstand 23 gleichzeitig auch der einzige nicht-triviale Abstand ist.

In dem gezeigten Beispiel sind die drei Messfenster 22 in gleichmässigem Abstand 224a, 224b voneinander angeordnet.

Zusammenfassend ist festzustellen, dass neben den oben beschrieben Ausführungsformen noch viele weitere Varianten möglich sind: So ist zum Beispiel die genaue Ausführung der Drahtführung nicht von Bedeutung für die Wahl des Kamerasystems. Auf Beleuchtungseinrichtungen kann auch verzichtet werden. Die Datenauswertungseinheit kann in die Vorrichtung baulich integriert sein (zum Beispiel indem sie sich im Inneren des Podestes 8 befindet oder direkt daran montiert ist) oder es kann sich um eine logische Integration handeln, bei der die Datenauswertungseinheit an einem anderen Ort angeordnet ist als die Drahtführung und das Kamerasystem. Richtelementsteuerung 12 und Datenauswertungseinheit 5 können in einem Rechner ausgeführt werden und sogar auch in ihrer Logik kaum trennbar miteinander verbunden sein oder aber räumlich und/oder logisch völlig eigenständige Elemente.

## Patentansprüche

1. Vorrichtung zur Erfassung einer Drahtkrümmung (1), mit einer Drahtführung (3),
wobei die Vorrichtung weiter folgendes umfasst:
a) ein Kamerasystem umfassend mindestens eine Kamera (4), wobei das Kamerasystem derart positioniert und dimensioniert ist, dass es einen in der Drahtführung (3) geführten Draht (2) und seine Begrenzung (22a, 22b) senkrecht zu einer Drahtlängsachse (21) als Bilddaten erfassen kann, und
b) eine Datenauswertungseinheit (5), die dazu eingerichtet ist, um die Bilddaten des Kamerasystems zu empfangen und daraus die Drahtkrümmung zu bestimmen
c) **dadurch gekennzeichnet, dass** die Datenauswertungseinheit (5) derart gestaltet ist, dass Konturen ermittelt werden,
indem alle Bildpunkte bestimmt werden, die selbst einen Wert oberhalb eines Schwellenwertes und mindestens einen Nachbarn mit einem Wert unterhalb oder gleich des Schwellenwertes haben und/oder die selbst einen Wert unterhalb oder gleich des Schwellenwertes und mindestens einen Nachbarn mit einem Wert oberhalb des Schwellenwertes haben.

2. Vorrichtung nach Anspruch 1, wobei das Kamerasystem eine Kamera (4) und eine Schwenkeinheit (6) umfasst, wobei die Schwenkeinheit (6) einen Schwenkarm (62) und einen Grundteil (61) umfasst und wobei die Kamera (4) an dem Schwenkarm (62) befestigt ist, welcher relativ zum Grundteil (61) verschwenkbar ist und die Kamera (4) durch ein Verschwenken des Schwenkarms (62) eine erste und eine zweite Position erreichen kann, in welchen die Kamera (4) einen in der Drahtführung (3) geführten Draht (2) und seine Begrenzung (22a, 22b) senkrecht zur Drahtlängsachse (21) als Bilddaten erfassen kann und die Kamera (4) in der ersten und zweiten Position jeweils eine unterschiedliche Blickrichtung (42 a, b) hat und die Blickrichtung (42 a, b) der Kamera (4) in der ersten und einer zweiten Position einen Winkel (43) von grösser 0°, bevorzugt einen Winkel (43) zwischen 45° und 90°, insbesondere bevorzugt einen Winkel (45) von 90°, einschliesst.

3. Vorrichtung nach Anspruch 2, wobei eine Achse, um welche der Schwenkarm (62) relativ zum Grundteil (61) verschwenkbar ist, im Wesentlichen gleich der Achse ist, welche der Längsachse (21) eines in der Drahtführung (3) geführten Drahtes (2), insbesondere im Bereich der Drahtführung (3), entspricht.

4. Vorrichtung nach einem der Ansprüche 1 bis 3, umfassend eine Beleuchtungseinrichtung (9), wobei die Beleuchtungseinrichtung (9) insbesondere so angeordnet ist, dass sie Licht in einer umgekehrten Blickrichtung (42) einer Kamera (4) des Kamerasystems aussenden kann.

5. Vorrichtung nach einem der Ansprüche 2 bis 3, wobei eine Beleuchtungseinrichtung (9) an dem Schwenkarm (62) befestigt ist und zwar insbesondere derart, dass sie Licht in einer umgekehrten Blickrichtung (42) der am Schwenkarm befestigten Kamera (4) aussenden kann.

6. Vorrichtung nach einem der Ansprüche 1 bis 5, **gekennzeichnet durch** eine Schutzvorrichtung (10) für die mindestens eine Kamera (4) des Kamerasystems und insbesondere für die Beleuchtungseinrichtung (9) gemäß den Ansprüchen 4 oder 5, wobei die Schutzvorrichtung (10) insbesondere derart gestaltet ist, dass die mindestens eine Kamera (4) und Beleuchtungseinrichtung (9) in einer Parkposition vor Verschmutzung durch herumfliegende Teilchen geschützt sind, wobei die Schutzvorrichtung (10) insbesondere Blenden oder einseitig oder zweiseitig offene Boxen umfasst und bevorzugt in der Parkposition die mindestens eine Kamera (4) des Kamerasystem keine Bilddaten eines in der Drahtführung (3) geführten Drahtes (2) und seiner Begrenzungen (22a, 22b) erfassen kann.

7. Vorrichtung nach einem der Ansprüche 1 bis 6, bei welcher die Datenauswertungseinheit (5) derart gestaltet ist, dass sie folgenden Schritt ausführen kann:
a) die Bilddaten (14) auf einen gewünschten, vordefinierten Abschnitt zuschneiden, so dass ein Bildausschnitt (15) resultiert.

8. Vorrichtung nach einem der Ansprüche 1 - 7, bei welcher die Datenauswertungseinheit (5) weiter dazu ausgelegt ist, folgende Schritte durchzuführen:
a) Festlegen eines weit entfernten virtuellen Referenzpunktes (19), wobei dieser bevorzugt mehr als das zehnfache des mittleren Abstands (181) zwischen der ersten und der zweiten Kontur (18a, b) von jeder der Konturen (18a, b) entfernt ist;
b) Ausgehend von einem Ende einer ersten Kontur (18a), nun für alle Bildpunkte die zur ersten Kontur gehören und innerhalb eines Testbereichs (191) mit einer vordefinierten festen Länge (1911) liegen, den Abstand (192) zum virtuellen Referenzpunkt (19) bestimmen;
c) Erfassen des Bildpunktes (17) der ersten Kontur (18a) innerhalb des Testbereiches (191), der den kleinsten Abstand (193a) zum virtuellen Referenzpunkt (19) aufweist, als Hüllenpunkt (20);
d) Verschieben des Testbereiches (191) in seiner Längsrichtung, insbesondere um eine Länge welche grösser oder gleich einer Länge eines der Bildpunkte (172) und kleiner oder gleich der Länge (1911) des Testbereichs (191) ist, bevorzugt um eine Länge gleich der Länge eines der Bildpunkte (172);
e) Wiederholung der Punkte b), c) und d) bis die erste Kontur (18a) vollständig abgetastet ist;
f) analoge Durchführung der Schritte b) bis e) mit der zweiten Kontur (18b) anstelle der ersten (18a), wobei bevorzugt in Schritt c) der grösste, anstelle des kleinsten, Abstands (193b) zum virtuellen Referenzpunkt (19) zur Erfassung eines Hüllenpunktes (20) genutzt wird;
g) Interpolation der Hüllenpunkte (20) der ersten Konturen (18a) zu einer ersten Konturhülle (21a) und
h) Interpolation der Hüllenpunkte (20) der zweiten Kontur (18b) zu einer zweiten Konturhülle (21b).

9. Vorrichtung nach einem der Ansprüche 1 bis 8, bei der die Datenauswertungseinheit (5) derart gestaltet ist, dass sie eine Krümmung in einer Ebene feststellen kann, indem
a) drei rechteckige Messfenster (22) gleicher Grösse definiert werden, bei denen jeweils beide Konturen (18a, b) oder Konturhüllen (21a, b) durch alle parallel zueinander liegenden Seitenlinien verlaufen und wobei die Messfenster (22) an drei unterschiedlichen Stellen entlang der Konturen (18a, b) oder Konturhüllen (21a, b) positioniert sind;
b) jeweils innerhalb jedes der Messfenster der Flächenschwerpunkt (222) aller Bildpunkte (221) bestimmt wird, die zwischen der ersten und der zweiten Kontur (18a,b) oder Konturhülle (21 a, b) liegen;
c) ein Vektor (223), welcher die beiden am weitesten von einander entfernten Flächenschwerpunkte (222) verbindet, bestimmt wird; und
d) den grössten Abstand (23) eines Flächenschwerpunkts (222) von dem Vektor (223) als ein Mass für eine Krümmung, insbesondere eine Drahtkrümmung in einer Ebene, bestimmt wird.

10. Vorrichtung nach Anspruch 9, wobei die Datenauswertungseinheit (5) dazu geeignet ist,
a) aus ersten Bilddaten, erzeugt von einer Kamera (4) in einer ersten Position oder einer ersten Kamera (4a),
b) eine erste Krümmung in einer ersten Ebene, parallel zur Normalenebene der Blickrichtung (42a) der ersten Kamera (4a) oder der ersten Position der Kamera (4), zu bestimmen und
c) aus zweiten Bilddaten, erzeugt von einer Kamera (4) in einer zweiten Position oder einer zweiten Kamera (4b),
d) eine zweite Krümmung in einer zweiten Ebene, parallel zur Normalenebene der Blickrichtung (42b) der zweiten Kamera (4b) oder der zweiten Position der Kamera (4), zu bestimmen und
e) die erste und die zweite Krümmung sowie Informationen zur Lage der Blickrichtungen (42a, b) zueinander und/oder insbesondere die Lage der Blickrichtungen (42a, b) gegenüber einem gemeinsamen Referenzraum zu nutzen, um eine Krümmung in drei Raumdimensionen und/oder insbesondere gegenüber dem Referenzraum zu bestimmen.

11. Drahtrichteinheit (11), umfassend
a) eine Vorrichtung (1) zur Erfassung einer Drahtkrümmung nach einem der Ansprüche 1 bis 10 und
b) eine Richtelementsteuerung (12), die Daten über eine von der Vorrichtung (1) erfasste Drahtkrümmung empfangen und derart auswertet, dass sie
c) Richtelemente (13a, b) in Abhängigkeit der Daten positionieren und/oder steuern kann, so dass insbesondere die durch die Vorrichtung (1) erfasste Drahtkrümmung zumindest teilweise ausgeglichen werden kann.

12. Verfahren zur Bestimmung der Drahtkrümmung, umfassend die Schritte:
a) Positionierung eines Drahtes (2) in einer Vorrichtung zur Erfassung einer Drahtkrümmung (1) nach einem der Ansprüche 1 bis 10;
b) Erfassung von Bilddaten des Drahtes (2) durch das Kamerasystem;
c) Übermittlung der Bilddaten an die Datenauswertungseinheit (5);
d) Auswertung der Bilddaten zur Erfassung der Drahtkrümmung durch die Datenauswertungseinheit (5) und insbesondere durch ein durch die Datenauswertungseinheit (5) ausführbares Datenauswertungsprogramm.

13. Verfahren zum Drahtrichten, umfassend
a) das Verfahren zur Bestimmung der Drahtkrümmung nach Anspruch 12;
b) Übermittelung der Drahtkrümmung an eine Richtelementsteuerung (12); und
c) Positionierung und/oder Steuerung von Richtelementen (13a,b) in Abhängigkeit der übermittelten Drahtkrümmung, so dass insbesondere der gemessenen Drahtkrümmung zumindest zum Teil entgegen gewirkt wird.

14. Verfahren zum Drahtrichten, wobei das Verfahren nach Anspruch 13 mehrfach mit demselben Draht (2) wiederholt wird.

15. Verfahren zur Bestimmung der Drahtkrümmung, wobei das Verfahren nach Anspruch 12 mehrfach mit demselben Draht (2) wiederholt wird.

## Claims

1. Apparatus for capturing a wire curvature (1), having a wire guide (3), wherein the apparatus furthermore comprises:
a) a camera system comprising at least one camera (4), wherein the camera system is positioned and dimensioned such that it can capture a wire (2), guided in the wire guide (3), and the boundary (22a, 22b) thereof perpendicular to a wire longitudinal axis (21) in the form of image data, and
b) a data evaluation unit (5), which is set up to receive the image data of the camera system and to determine therefrom the wire curvature,
c) **characterized in that** the data evaluation unit (5) is configured such that contours are ascertained by determining all image points that themselves have a value above a threshold value and have at least one neighbour having a value below or equal to the threshold value, and/or that themselves have a value below or equal to the threshold value and have at least one neighbour having a value above the threshold value.

2. Apparatus according to Claim 1, wherein the camera system comprises a camera (4) and a pivot unit (6), wherein the pivot unit (6) comprises a pivot arm (62) and a main part (61) and wherein the camera (4) is attached to the pivot arm (62) which is pivotable in relation to the main part (61), and the camera (4) can achieve, by pivoting of the pivot arm (62), a first and a second position in which the camera (4) can capture a wire (2), guided in the wire guide (3), and the boundary (22a, 22b) thereof perpendicular to the wire longitudinal axis (21) in the form of image data, and the camera (4) has in each case a different viewing direction (42 a, b) in the first and second position, and the viewing direction (42 a, b) of the camera (4) in the first and a second position encloses an angle (43) of greater than 0°, preferably an angle (43) between 45° and 90°, with particular preference an angle (45) of 90°.

3. Apparatus according to Claim 2, wherein an axis about which the pivot arm (62) is pivotable in relation to the main part (61) is substantially the same as the axis that corresponds to the longitudinal axis (21) of a wire (2), guided in the wire guide (3), in particular in the region of the wire guide (3).

4. Apparatus according to one of Claims 1 to 3, comprising an illumination device (9), wherein the illumination device (9) is in particular arranged such that it can emit light in an opposite viewing direction (42) of a camera (4) of the camera system.

5. Apparatus according to one of Claims 2 to 3, wherein an illumination device (9) is attached to the pivot arm (62), specifically in a manner such that it can emit light in an opposite viewing direction (42) of the camera (4) that is attached to the pivot arm.

6. Apparatus according to one of Claims 1 to 5, **characterized by** a protection apparatus (10) for the at least one camera (4) of the camera system and in particular for the illumination device (9) according to Claim 4 or 5, wherein the protection apparatus (10) is in particular configured such that the at least one camera (4) and illumination device (9) are protected in a park position against soiling by flying particles, wherein the protection apparatus (10) comprises in particular screens or boxes which are open on one or two sides and, preferably in the park position, the at least one camera (4) of the camera system cannot capture image data of a wire (2) guided in the wire guide (3) and the boundaries (22a, 22b) thereof.

7. Apparatus according to one of Claims 1 to 6, in which the data evaluation unit (5) is configured such that it can perform the following step:
a) cropping the image data (14) to a desired, predefined portion in a manner such that an image detail (15) is obtained.

8. Apparatus according to one of Claims 1-7, in which the data evaluation unit (5) is furthermore configured to perform the following steps:
a) fixing a virtual reference point (19) that is located far away, wherein said reference point is preferably situated at a distance from each of the contours (18a,
b) that is more than ten times the average distance (181) between the first and the second contour (18a,b);
b) determining, starting from one end of a first contour (18a), for all image points that are associated with the first contour and are located within a test region (191) having a predefined fixed length (1911), the distance (192) from the virtual reference point (19);
c) capturing the image point (17) of the first contour (18a) within the test region (191) that has the shortest distance (193a) from the virtual reference point (19) as an envelope point (20);
d) displacing the test region (191) in the longitudinal direction thereof, in particular by a length that is greater than or equal to a length of one of the image points (172) and shorter than or equal to the length (1911) of the test region (191), preferably by a length that is equal to the length of one of the image points (172);
e) repeating items b), c) and d) until the first contour (18a) has been completely scanned;
f) analogously performing steps b) to e) for the second contour (18b) instead of the first one (18a), wherein preferably the greatest, not the shortest, distance (193b) from the virtual reference point (19) is used for capturing an envelope point (20) in step c);
g) interpolating the envelope points (20) of the first contours (18a) to a first contour envelope (21a), and
h) interpolating the envelope points (20) of the second contour (18b) to a second contour envelope (21b).

9. Apparatus according to one of Claims 1 to 8, in which the data evaluation unit (5) is configured such that it can ascertain a curvature in a plane by
a) defining three rectangular measurement windows (22) of identical size, in which in each case both contours (18a, b) or contour envelopes (21a, b) extend through all mutually parallel side lines and wherein the measurement windows (22) are positioned at three different locations along the contours (18a, b) or contour envelopes (21a, b);
b) determining the centroid of the area (222) of all image points (221) that are located between the first and the second contour (18a,b) or contour envelope (21 a, b) in each case within each of the measurement windows;
c) determining a vector (223) that connects the two centroids of the area (222) that are located the furthest from one another; and
d) determining the greatest distance (23) of a centroid of the area(222) from the vector (223) as a measure of a curvature, in particular a wire curvature in a plane.

10. Apparatus according to Claim 9, wherein the data evaluation unit (5) is suitable for
a) determining, from first image data produced by a camera (4) in a first position or by a first camera (4a),
b) a first curvature in a first plane, parallel to the normal plane of the viewing direction (42a) of the first camera (4a) or the first position of the camera (4), and
c) determining, from second image data produced by a camera (4) in a second position or by a second camera (4b),
d) a second curvature in a second plane, parallel to the normal plane of the viewing direction (42b) of the second camera (4b) or the second position of the camera (4), and
e) using the first and the second curvature and information relating to the position of the viewing directions (42a, b) with respect to one another and/or in particular the position of the viewing directions (42a, b) with respect to a common reference space to determine a curvature in three spatial dimensions and/or in particular with respect to the reference space.

11. Wire straightening unit (11), comprising
a) an apparatus (1) for capturing a wire curvature according to one of Claims 1 to 10, and
b) a straightening element controller (12) that receives and evaluates the data relating to a wire curvature captured by the apparatus (1) such that it can
c) position and/or control straightening elements (13a, b) in dependence on the data, such that in particular the wire curvature captured by the apparatus (1) can be at least partially corrected.

12. Method for determining the wire curvature, comprising the steps of:
a) positioning a wire (2) in an apparatus for capturing a wire curvature (1) according to one of Claims 1 to 10;
b) capturing image data of the wire (2) by way of the camera system;
c) transmitting the image data to the data evaluation unit (5);
d) evaluating the image data for capturing the wire curvature by way of the data evaluation unit (5) and in particular by way of a data evaluation program that is able to be executed by the data evaluation unit (5).

13. Method for wire straightening, comprising
a) the method for determining the wire curvature according to Claim 12;
b) transmitting the wire curvature to a straightening element controller (12); and
c) positioning and/or controlling straightening elements (13a,b) in dependence on the transmitted wire curvature, with the result that in particular the measured wire curvature is at least partially corrected.

14. Method for wire straightening, wherein the method according to Claim 13 is repeated a plurality of times with the same wire (2).

15. Method for determining the wire curvature, wherein the method according to Claim 12 is repeated a plurality of times with the same wire (2).

## Revendications

1. Arrangement pour détecter une courbure de fil (1), comprenant un guide-fil (3), l'arrangement comprenant en outre les éléments suivants :
a) un système de caméra comportant au moins une caméra (4), le système de caméra étant positionné et dimensionné de telle sorte qu'il peut acquérir sous la forme de données d'image un fil (2) passé dans le guide-fil (3) et sa délimitation (22a, 22b) perpendiculairement à un axe longitudinal de fil (21), et
b) une unité d'interprétation de données (5) qui est conçue pour recevoir les données d'images du système de caméra et déterminer la courbure de fil à partir de celles-ci,
c) **caractérisé en ce que** l'unité d'interprétation de données (5) est configurée de telle sorte que des contours peuvent être identifiés en déterminant tous les pixels qui possèdent eux-mêmes une valeur supérieure à une valeur de seuil et au moins un voisin ayant une valeur inférieure ou égale à la valeur de seuil et/ou qui possèdent eux-mêmes une valeur inférieure ou égale à la valeur de seuil et au moins un voisin ayant une valeur supérieure à la valeur de seuil.

2. Arrangement selon la revendication 1, le système de caméra comportant une caméra (4) et une unité de pivotement (6), l'unité de pivotement (6) comportant un bras pivotant (62) et une partie de base (61) et la caméra (4) étant fixée au bras pivotant (62), lequel peut pivoter par rapport à la partie de base (61) et la caméra (4), par un pivotement du bras pivotant (62), pouvant atteindre une première et une deuxième position dans lesquelles la caméra (4) peut acquérir sous la forme de données d'image un fil (2) passé dans le guide-fil (3) et sa délimitation (22a, 22b) perpendiculairement à un axe longitudinal de fil (21) et la caméra (4), dans la première et la deuxième position, possédant respectivement une direction de visée (42a, b) différente et la direction de visée (42a, b) de la caméra (4) dans la première et la deuxième position incluant un angle (43) supérieur à 0°, de préférence un angle (43) entre 45° et 90°, notamment de préférence un angle (45) de 90°.

3. Arrangement selon la revendication 2, un axe autour duquel le bras pivotant (62) peut pivoter par rapport à la partie de base (61) étant sensiblement égal à l'axe qui correspond à l'axe longitudinal (21) d'un fil (2) passé dans le guide-fil (3), notamment dans la zone du guide-fil (3).

4. Arrangement selon l'une des revendications 1 à 3, comprenant un dispositif d'éclairage (9), le dispositif d'éclairage (9) étant notamment disposé de telle sorte qu'il peut émettre de la lumière dans une direction de visée (42) inverse d'une caméra (4) du système de caméra.

5. Arrangement selon l'une des revendications 2 à 3, un dispositif d'éclairage (9) étant fixé au bras pivotant (62), et ce notamment de telle sorte qu'il peut émettre de la lumière dans une direction de visée (42) inverse de la caméra (4) fixée au bras pivotant.

6. Arrangement selon l'une des revendications 1 à 5, **caractérisé par** un arrangement de protection (10) pour l'au moins une caméra (4) du système de caméra et notamment pour le dispositif d'éclairage (9) selon les revendications 4 ou 5, l'arrangement de protection (10) étant notamment configuré de telle sorte que l'au moins une caméra (4) et le dispositif d'éclairage (9) sont, dans une position de stationnement, protégés contre un encrassement par des particules volantes, l'arrangement de protection (10) comportant notamment des écrans ou des coffrets ouverts d'un côté ou de deux côtés et, dans la position de stationnement, l'au moins une caméra (4) du système de caméra ne pouvant de préférence acquérir aucune donnée d'image d'un fil (2) passé dans le guide-fil (3) et ses délimitations (22a, 22b).

7. Arrangement selon l'une des revendications 1 à 6, dans lequel l'unité d'interprétation de données (5) est configurée de telle sorte qu'elle peut exécuter l'étape suivante :
a) découper les données d'image (14) sur une portion prédéfinie souhaitée, de sorte qu'il en résulte une portion d'image (15).

8. Arrangement selon l'une des revendications 1 à 7, dans lequel l'unité d'interprétation de données (5) est en outre configurée de telle sorte qu'elle peut exécuter les étapes suivantes :
a) définition d'un point de référence virtuel (19) lointain, celui-ci étant de préférence éloigné de plus du décuple de l'écart moyen (181) entre le premier et le deuxième contour (18a, b) de chacun des contours (18a, b) ;
b) en partant d'une extrémité d'un premier contour (18a), déterminer à présent, pour tous les pixels qui appartiennent au premier contour et se trouvent à l'intérieur d'une zone de test (191) ayant une longueur fixe (1911) prédéfinie, l'écart (192) par rapport au point de référence virtuel (19) ;
c) acquisition du pixel (17) du premier contour (18a) à l'intérieur de la zone de test (191) qui présente le plus petit écart (193a) par rapport au point de référence virtuel (19) en tant que point d'enveloppe (20) ;
d) décalage de la zone de test (191) dans sa direction longitudinale, notamment d'une longueur qui est égale ou supérieure à une longueur de l'un des pixels (172) et inférieure ou égale à la longueur (1911) de la zone de test (191), de préférence d'une longueur égale à la longueur de l'un des pixels (172) ;
e) répétition des alinéas b), c) et d) jusqu'à ce que le premier contour (18a) soit entièrement échantillonné ;
f) exécution similaire des étapes b) à e) avec le deuxième contour (18b) au lieu du premier (18a), le plus grand écart (193b) par rapport au point de référence virtuel (19), au lieu du plus petit, étant de préférence utilisé à l'étape c) pour l'acquisition d'un point d'enveloppe (20) ;
g) interpolation des points d'enveloppe (20) du premier contour (18a) en une première enveloppe de contour (21a) ; et
h) interpolation des points d'enveloppe (20) du deuxième contour (18b) en une deuxième enveloppe de contour (21b).

9. Arrangement selon l'une des revendications 1 à 8, dans lequel l'unité d'interprétation de données (5) est configurée de telle sorte qu'elle peut constater une courbure dans un plan, en
a) définissant trois fenêtres de mesure (22) rectangulaires de même taille, avec lesquelles les deux contours (18a, b) ou les enveloppes de contour (21a, b) passent respectivement à travers toutes les lignes latérales parallèles les unes aux autres et les fenêtres de mesure (22) étant positionnées en trois emplacements différents le long des contours (18a, b) ou des enveloppes de contour (21a, b) ;
b) déterminant, respectivement à l'intérieur de chacune des fenêtres de mesure, un barycentre de surface (222) de tous les pixels (221) qui se trouvent entre le premier et le deuxième contour (18a, b) ou l'enveloppe de contour (21a, b) ;
c) déterminant un vecteur (223) qui relie les deux barycentres de surface (222) les plus éloignés l'un de l'autre ; et
d) déterminant le plus grand écart (23) entre un barycentre de surface (222) et le vecteur (223) en tant que mesure pour une courbure, notamment une courbure de fil dans un plan.

10. Arrangement selon la revendication 9, dans lequel l'unité d'interprétation de données (5) est conçue pour
a) à partir de premières données d'image, générées par une caméra (4) dans une première position ou une première caméra (4a),
b) déterminer une première courbure dans un premier plan parallèle au plan normal de la direction de visée (42a) de la première caméra (4a) ou de la première position de la caméra (4) et
c) à partir de deuxièmes données d'image, générées par une caméra (4) dans une deuxième position ou une deuxième caméra (4b),
d) déterminer une deuxième courbure dans un deuxième plan parallèle au plan normal de la direction de visée (42b) de la deuxième caméra (4b) ou de la deuxième position de la caméra (4) et
e) utiliser la première et la deuxième courbure ainsi que des informations à propos de la position des directions de visée (42a, b) l'une par rapport à l'autre et/ou notamment la position des directions de visée (42a, b) par rapport à un espace de référence commun afin de déterminer une courbure dans trois dimensions spatiales et/ou notamment par rapport à l'espace de référence.

11. Unité de dressage de fil (11), comportant
a) un arrangement (1) pour détecter une courbure de fil selon l'une des revendications 1 à 10 et
b) une commande d'élément de dressage (12) qui reçoit des données à propos d'une courbure de fil détectée par l'arrangement (1) et les interprète de telle sorte qu'elle
c) peut positionner et/ou commander des éléments de dressage (13a, b) en fonction des données de sorte que la courbure de fil, notamment détectée par l'arrangement (1), peut être au moins partiellement compensée.

12. Procédé de détermination de la courbure de fil, comprenant les étapes suivantes :
a) positionnement d'un fil (2) dans un arrangement pour détecter une courbure de fil (1) selon l'une des revendications 1 à 10 ;
b) acquisition de données d'image du fil (2) par le système de caméra ;
c) communication des données d'image à l'unité d'interprétation de données (5) ;
d) interprétation des données d'image en vue de détecter la courbure de fil par l'unité d'interprétation de données (5) et notamment par un programme d'interprétation de données exécutable par l'unité d'interprétation de données (5).

13. Procédé de dressage de fil, comprenant
a) le procédé de détermination de la courbure de fil selon la revendication 12 ;
b) communication de la courbure de fil à une commande d'élément de dressage (12) ; et
c) positionnement et/ou commande d'éléments de dressage (13a, b) en fonction de la courbure de fil communiquée de manière à contrer au moins partiellement la courbure de fil mesurée.

14. Procédé de dressage de fil, le procédé selon la revendication 13 étant répété plusieurs fois avec le même fil (2).

15. Procédé de détermination de la courbure de fil, le procédé selon la revendication 12 étant répété plusieurs fois avec le même fil (2).
